# EUROPEAN PATENT APPLICATION

(11) **EP 4 826 571 A1**
(43) Date of publication of application: **21.10.2026**
(21) Application number: 24903376.2
(22) Date of filing: 01.11.2024
(51) Int. Cl.: G06F 18/214, G06N 20/00

(54) **INFORMATION PROCESSING DEVICE, INFORMATION PROCESSING METHOD, AND PROGRAM**

(30) Priority: 14.12.2023 JP 2023210706
(71) Applicant: Sony Semiconductor Solutions Corporation, Atsugi-shi, Kanagawa 243-0014 (JP)
(72) Inventor: KOGA, Kazuki, Atsugi-shi, Kanagawa 243-0014 (JP); MATSUMOTO, Nana, Atsugi-shi, Kanagawa 243-0014 (JP); MAI, Ngoctrung, Atsugi-shi, Kanagawa 243-0014 (JP); ISSHIKI, Akitoshi, Atsugi-shi, Kanagawa 243-0014 (JP)
(74) Representative: MFG Patentanwälte Meyer-Wildhagen Meggle-Freund Gerhard PartG mbB
(86) International application number: PCT/JP2024/039003
(87) International publication number: WO 2025/126714

(57) **Abstract**

When bias exists in a learning data set, for example, the bias is set to be adjustable.

For this object, an information processing device includes: an attribute extractor that extracts an attribute from a data set having been input; a labeling unit that labels an attribute for each piece of data constituting the data set; a bias detector that detects a bias for each attribute on the basis of a result of the labeling; and a data set adjuster that adjusts the data set to improve at least one bias detected by the bias detector.

## Description

### TECHNICAL FIELD

The present technology relates to an information processing device, an information processing method, and a program.

### BACKGROUND ART

Development of an artificial intelligence (AI) field advances utilization of AI in various fields. However, an existing AI model (learning model) is known to learn various biases. Examples of causes of the biases include a bias included in a learning data set (abbreviated below as a data set appropriately) learned by the AI model. The bias included in the data set may cause false recognition in which the AI model obtained using the data set erroneously recognizes a specific race as an animal or gives a negative evaluation for a specific gender. Thus, a method for improving such a bias has been proposed (e.g. see Patent Documents 1 and 2 below).

### CITATION LIST

### PATENT DOCUMENT

Patent Document 1: Japanese Patent Application Laid-Open No. 2020-2255
Patent Document 2: Japanese Patent Application Laid-Open No. 2021-189553

### SUMMARY OF THE INVENTION

### PROBLEMS TO BE SOLVED BY THE INVENTION

Patent Document 1 describes technology that has a problem of causing inefficient generation of a data set in which the generation needs to be repeated to improve bias. Then, Patent Document 2 describes technology that is a method for reducing bias during learning of an AI model, and has a problem of hardly determining whether the bias is caused by a model or a data set.

It is an object of the present technology to provide an information processing device, an information processing method, and a program capable of improving a bias corresponding to at least one attribute included in a data set.

### SOLUTIONS TO PROBLEMS

The present technology is an information processing device, for example,
the information processing device including:
an attribute extractor that extracts an attribute from a data set having been input;
a labeling unit that labels an attribute for each data constituting the data set;
a bias detector that detects a bias for each attribute on the basis of a result of the labeling; and
a data set adjuster that adjusts the data set to improve at least one bias detected by the bias detector.

The present technology is an information processing method, for example,
the information processing method including:
extracting an attribute from a data set having been input using an attribute extractor;
labeling an attribute for each data constituting the data set using a labeling unit;
detecting a bias for each attribute on the basis of a result of the labeling using a bias detector; and
adjusting the data set to improve at least one bias detected by the bias detector using a data set adjuster.

The present technology is a program, for example,
the program causing a computer to execute an information processing method including:
extracting an attribute from a data set having been input using an attribute extractor;
labeling an attribute for each data constituting the data set using a labeling unit;
detecting a bias for each attribute on the basis of a result of the labeling using a bias detector; and
adjusting the data set to improve at least one bias detected by the bias detector using a data set adjuster.

### BRIEF DESCRIPTION OF DRAWINGS

Fig. 1 is a block diagram for illustrating a configuration example of an information processing device according to a first embodiment.
Fig. 2 is a diagram for illustrating an outline of processing performed by the information processing device according to the first embodiment.
Fig. 3 is a flowchart for illustrating a flow of processing performed by the information processing device according to the first embodiment.
Fig. 4 is a diagram for illustrating a first display example of a labeling result obtained by a labeling unit.
Fig. 5 is a diagram for illustrating a second display example of the labeling result obtained by the labeling unit.
Fig. 6 includes parts A to C that are each a diagram for illustrating a display example of a bias detection result obtained by a bias detector.
Fig. 7 is a diagram to be referred to when processing performed by a data set adjuster is described.
Fig. 8 is a diagram for illustrating a display example of information indicating a data set with improved bias.
Fig. 9 is a flowchart illustrating a flow of processing performed in a second embodiment.
Fig. 10 is a flowchart illustrating a flow of processing performed in a third embodiment.
Fig. 11 is a diagram that is referred to when processing performed in the third embodiment is described.
Fig. 12 is a diagram that is referred to when the processing performed in the third embodiment is described.
Fig. 13 includes parts A and B that are each a diagram referred to when the processing performed in the third embodiment is described.
Fig. 14 is a diagram that is referred to when the processing performed in the third embodiment is described.
Fig. 15 is a diagram that is referred to when the processing performed in the third embodiment is described.
Fig. 16 is a diagram that is referred to when the processing performed in the third embodiment is described.
Fig. 17 is a block diagram for illustrating a configuration example of an information processing device according to a fourth embodiment.
Fig. 18 is a schematic block diagram illustrating a general configuration of an information processing system according to an embodiment of the present disclosure.
Fig. 19 is a block diagram illustrating a configuration of each device that registers or downloads an artificial intelligence (AI) model or an AI application using a marketplace function included in an information processing device on a cloud side in the information processing system illustrated in Fig. 18.
Fig. 20 is a flowchart illustrating a flow of a part of processing performed by each device when an AI model or an AI application is registered or downloaded using the marketplace function.
Fig. 21 is a flowchart illustrating a flow of another part of processing performed by each device when the AI model or the AI application is registered or downloaded using the marketplace function.
Fig. 22 is a block diagram illustrating a connection mode between an information processing device on a cloud side and an information processing device on an edge side.
Fig. 23 is a block diagram illustrating a configuration example of the information processing device on the cloud side.
Fig. 24 is a block diagram illustrating an internal configuration example of a camera as an imaging device.
Fig. 25 is a schematic configuration diagram illustrating a configuration example of an image sensor as an imaging device.
Fig. 26 is a block diagram illustrating a software configuration example of an imaging device.
Fig. 27 is a block diagram illustrating an operation environment of a container, in which container technology is used.
Fig. 28 is a block diagram illustrating an example of a hardware configuration of an information processing device.
Fig. 29 is a diagram for illustrating an imaging device and an imaging device system to which the present technology is applicable.
Fig. 30 is a diagram for illustrating an imaging device and an imaging device system to which the present technology is applicable.
Fig. 31 is a diagram for illustrating an imaging device and an imaging device system to which the present technology is applicable.
Fig. 32 is a diagram for illustrating an imaging device and an imaging device system to which the present technology is applicable.
Fig. 33 is a diagram for illustrating a first application example of the information processing device on the cloud side.
Fig. 34 is a diagram for illustrating a second application example of the information processing device on the cloud side.
Fig. 35 includes parts A and B that are each a diagram for illustrating a third application example of the information processing device on the cloud side.
Fig. 36 is a diagram for illustrating a fourth application example of the information processing device on the cloud side.
Fig. 37 is a diagram for illustrating a modification of the fourth application example of the information processing device on the cloud side.
Fig. 38 is a diagram for illustrating a fifth application example of the information processing device on the cloud side.

### MODE FOR CARRYING OUT THE INVENTION

Embodiments and the like of the present technology will be described below with reference to the drawings. The description will be given in the following order. Then, the description will not be appropriately duplicated in the present specification and the drawings by denoting components substantially identical in function or configuration with the same reference numerals.
<First embodiment>
<Second embodiment>
<Third embodiment>
<Fourth embodiment>
<Fifth embodiment>
<Example>
<Modification>

### <First embodiment>

### [Configuration example of information processing device]

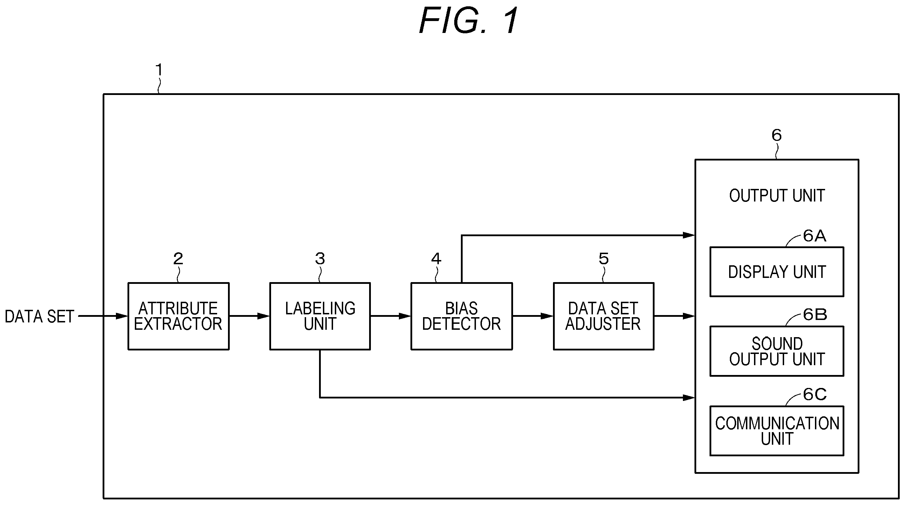

Fig. 1 is a block diagram illustrating a configuration example of an information processing device (information processing device 1) according to a first embodiment. The information processing device 1 is a cloud server, for example, but is not limited thereto. The information processing device 1 may be an edge device, a fog server existing between the edge device and a cloud server, or the like. Then, specific examples of the cloud server, the edge device, and the fog server will be described later.

The information processing device 1 receives a data set. The data set includes a plurality of pieces of data (a large amount of data). The data set may be stored in a storage device provided in the information processing device 1, or may be supplied from the outside of the information processing device 1 through a network such as the Internet. Although a type of data constituting the data set is not particularly limited, image data will be used as an example of data in the following description. Additionally, each piece of image data in which a "male" or a "female" is annotated as an attribute will be described.

The information processing device 1 includes an attribute extractor 2, a labeling unit 3, a bias detector 4, a data set adjuster 5, and an output unit 6, for example.

The attribute extractor 2 extracts an attribute from the data set having been received. Although a method for extracting an attribute is not limited to a specific method, CLIP2Style generative adversarial network (GAN) is used as an example in the present embodiment. The CLIP2StyleGAN is schematically a technique in which features are extracted from image data constituting a data set using an encoder of CLIP, image features having been obtained are subjected to principal component analysis (PCA) to obtain an i-th principal component direction, and a language expression corresponding to a change in edit-directions corresponding to the i-th principal component direction, that is, an attribute is automatically extracted (acquired). The attribute can be automatically extracted by searching for a word similar to a semantic concept of the i-th principal component among words held by the CLIP. The attribute having been automatically extracted can be interpreted by a person and grasps features of the data set. Then, the semantic concept is acquired in a flow below, for example. Each principal component of the PCA described above includes several attributes (e.g., two attributes of an "age" and a "smile"). Next, data reactive to each principal component is extracted from the data set (a sample group including an age and a smile is extracted from a face image). Linguistic expression is acquired by searching an attribute using an image encoder of the CLIP, a text encoder of the CLIP, and the words held by the CLIP of the extracted data. Specifically, a word similar to an expression of the sample group having been extracted is searched among the words held by the CLIP. Here, a smile and an age are acquired as a language.

The labeling unit 3 labels each piece of data (e.g., image data) constituting the data set with the attribute extracted by the attribute extractor 2. Although a labeling method is not limited to a specific method, the CLIP is used as the labeling method in the present embodiment. The CLIP is a method for determining a degree of similarity between each piece of image data and the attribute extracted by the attribute extractor 2 as a label, and giving a label to image data having a predetermined degree of similarity or more. Consequently, presence or absence of the attribute extracted by the attribute extractor 2 is classified for each piece of the image data. As a result, the presence or absence of the attribute can be classified for each piece of the image data without causing the information processing device 1 to learn.

The bias detector 4 detects a bias for each attribute on the basis of a result of labeling performed by the labeling unit 3. The attributes extracted by the attribute extractor 2 may include an attribute without a bias in the data set. Thus, an attribute having a bias needs to be identified. For example, the bias detector 4 calculates a degree of imbalance for each attribute to detect an attribute having a predetermined degree of imbalance or more as an attribute having a bias. Available examples of a distance and the amount of information used for calculating the degree of imbalance include "Euclidean distance", "Chebyshev distance", "Kullback Leibler divergence", "Hellinger distance", "Total variation distance", and "Chi-square divergence".

The data set adjuster 5 adjusts the data set to improve at least one bias detected by the bias detector 4. Then, a specific adjustment example of the data set will be described later.

The output unit 6 is a generic term for devices that output various types of information. The output unit 6 includes a display unit 6A, a sound output unit 6B, and a communication unit 6C, for example. The display unit 6A is a liquid crystal display (LCD) or an organic electro luminescence (EL) display. The sound output unit 6B is a device that reproduces sound, such as a speaker. The communication unit 6C is a communication device that transmits and receives data and commands to and from a device capable of communicating with the information processing device 1 through a network such as the Internet or a wireless local area network (LAN).

The output unit 6 outputs display information obtained by visualizing a result of labeling performed by the labeling unit 3, for example. The output unit 6 also outputs display information obtained by visualizing information based on the bias for each attribute detected by the bias detector 4, for example. The output unit 6 further outputs display information obtained by visualizing a result of bias improved by the data set adjuster 5, for example. Then, a specific output example will be described later. The display information having been output may be displayed on the display unit 6A provided in the information processing device 1, or may be displayed on a display unit provided in another device (e.g., a user terminal 200 to be described later).

### [Flow of processing]

### (Outline)

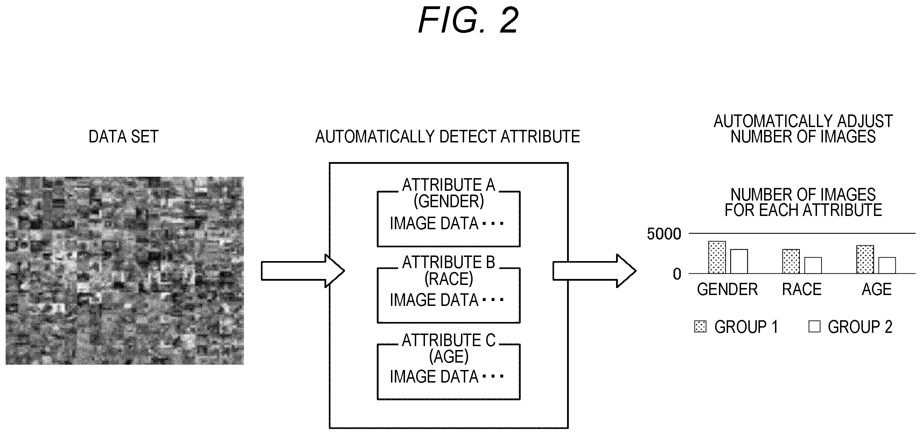

With reference to Fig. 2, an outline of processing performed by the information processing device 1 will be described. The attribute extractor 2 automatically extracts an attribute from the data set having been received. Then, the labeling unit 3 labels each image data with an attribute. Fig. 2 shows an example in which an attribute A is a gender, an attribute B is a race, and an attribute C is an age. Each attribute includes a set of image data to which the attribute is assigned. The image data may be labeled with a plurality of attributes. As shown on the left of Fig. 2, a result of labeling performed by the labeling unit 3 is displayed in a tabular format (e.g., a bar graph format). For example, the image data is displayed such that the number of pieces of image data to which "gender" is added as an attribute among image data annotated as a group 1 and the number of pieces of image data to which "gender" is added as an attribute among image data annotated as a group 2 are displayed side by side. Then, the image data is displayed such that the number of pieces of image data to which "race" is added as an attribute among image data annotated as a group 1 and the number of pieces of image data to which the "race" is added as an attribute among image data annotated as a group 2 are displayed side by side. Additionally, the image data is displayed such that the number of pieces of image data to which the "age" is added as an attribute among image data annotated as a group 1 and the number of pieces of image data to which the "age" is added as an attribute among image data annotated as a group 2 are displayed side by side.

On the basis of the result of labeling performed by the labeling unit 3, the bias detector 4 detects a bias for each attribute. For example, a bias is assumed to be detected for all attributes (gender, race, and age in this example). The data set adjuster 5 adjusts contents of the data set to improve bias of each attribute for which the bias is detected.

For example, the data set adjuster 5 performs processing of equalizing the number of pieces of image data to which "gender" is added as an attribute among the image data annotated as the group 1 and the number of pieces of image data to which "gender" is added as an attribute among the image data annotated as the group 2 in the image data.

### (Flow of processing)

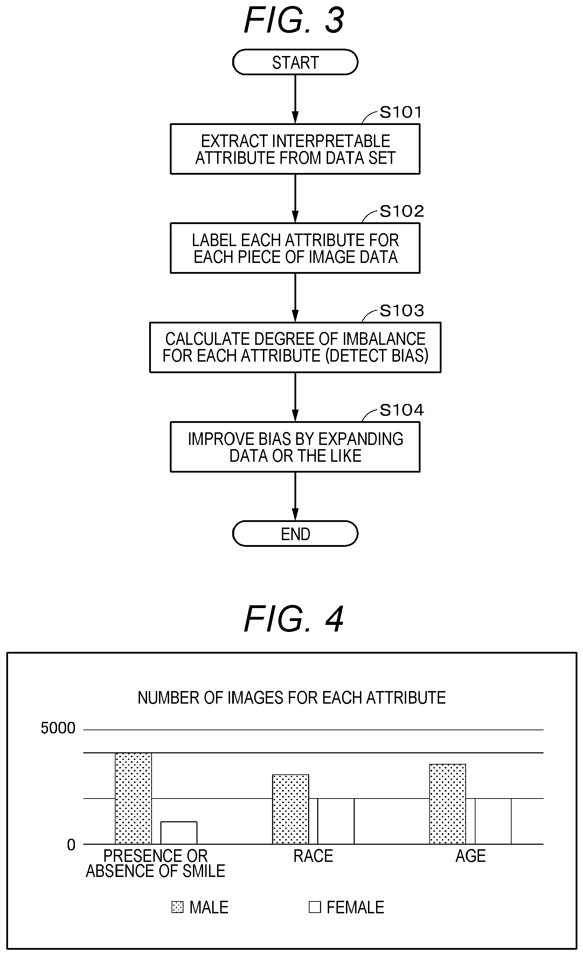

Fig. 3 is a flowchart illustrating a flow of processing performed by the information processing device 1. Then, a flow of processing will be described below in which an AI model of a gender classification task is assumed.

When the processing is started, the attribute extractor 2 extracts an interpretable attribute from the data set in step S101. Specifically, a latent spatial representation is obtained by using an image encoder of the CLIP for an image of the data set. The latent spatial representation has an average that is a common theme of the data set. For example, a face image data set has a theme that expresses "face image". The average is subtracted from each latent spatial representation. Next, PCA is performed on the latent spatial representation having been obtained. The first principal component and the like obtained here are assumed to greatly change the linguistic expression learned by the CLIP. However, a plurality of attributes may be changed at this stage. Each attribute is assumed to be interpretable. Next, a language expression is automatically assigned to the attribute having been extracted. Specifically, the language expression is assigned to the attribute using the text encoder of the CLIP. The language expression may be provided automatically or may be filtered manually to address aggressive words included in a text of the CLIP.

This example shows the data set including images, to each of which a label of the "male" or the "female" is annotated in advance. This example will be described in which the attribute extractor 2 extracts "presence or absence of smile", the "race", and the "age" as examples of the attribute. Then, the attribute extractor 2 extracts not only an attribute with bias but also an attribute without bias. The attribute extracted by the attribute extractor 2 corresponds to perturbation ΔW given to a latent variable W in the CLIP2StyleGAN. Then, the processing proceeds to step S102.

In step S102, the labeling unit 3 labels the attribute extracted by the attribute extractor 2 for each piece of image data. Specifically, the presence or absence of the attribute is binary classified for each piece of image data constituting the data set for the attribute extracted by the attribute extractor 2. Consequently, a frequency of each attribute in the data set can be calculated. Additionally, quality of the data set before bias improvement can be visualized by presenting the frequency that is a result of the calculation to the user with a graph or the like. Then, the processing proceeds to step S103.

In step S103, the bias detector 4 detects presence or absence of bias of the attribute by calculating a degree of imbalance for each attribute, for example. In step S101, the interpretable attribute is automatically extracted. However, attributes having been extracted are considered to include an attribute that is not bias of the data set. Thus, an attribute considered to be bias needs to be extracted from the attributes. The bias of the data set occurs with attributes that are unbalanced in the data set or with attributes that are not originally related to each other and have a correlation due to sampling of the data set. Conceivable examples of the correlation between attributes that are not originally related to each other include the following. When a data set including a "dog" and a "cat" is considered, the data set is assumed to include many images in which the "cat" is taken in a bedroom. At this time, an image in which a "bed" and a "dog" are present may be determined that the image includes the "cat" due to an inappropriate correlation occurring between the "bed" and the "cat" in the bedroom. Thus, conceivable examples of an attribute considered to have bias include an attribute that occupies a majority of a data set without an original relationship with an explanatory variable, and an attribute that occurs when distribution between an attribute of a data set and an explanatory variable has bias. The attribute with bias can be finally identified by calculating a degree of imbalance for each attribute from the graph or the frequency of the attribute described in step S102. For the calculation of the degree of imbalance, the above-described "Euclidean distance" or the like is used. Then, the processing proceeds to step S104.

In step S104, the data set adjuster 5 improves the bias by expanding the image data constituting the data set, for example. Then, improving the bias means setting the degree of imbalance to zero or setting the degree of imbalance to be equal to or less than a predetermined value, for example. A specific example of the processing performed by the data set adjuster 5 will be described later.

The data set with improved bias may be stored in a storage device (not illustrated) provided in the information processing device 1. The data set after the bias improvement may be stored to be able to be downloaded by being accessed by another device. The data set with the improved bias also may be transmitted from the information processing device 1 to another device through the communication unit 6C provided in the output unit 6.

### [Display example of labeling result]

### (First display example)

Next, a display example of display information will be described in which a labeling result obtained by the labeling unit 3 is visualized. The display example described below may be displayed on the display unit 6A or may be displayed on a display unit provided in a device capable of communicating with the information processing device 1.

Fig. 4 is a diagram for illustrating a first display example of the labeling result obtained by the labeling unit 3. The first display example is an example in which a labeling result obtained by the labeling unit 3 (in other words, contents of the data set before bias improvement) is visualized in a graph format, more specifically, in a bar graph format.

As illustrated in Fig. 4, the attributes (in the present example, the "presence or absence of smile", the "race", and the "age") extracted by the attribute extractor 2 are displayed along a horizontal axis direction. A vertical axis (height of bar) indicates the number of images. Although 5000 images are illustrated as the number of images in the example of Fig. 4, the number is merely an example. For example, a line for every 1000 images may be displayed to enable a user to recognize a finer number of images.

The number of pieces of image data to which the "presence or absence of a smile" is added as an attribute among the image data in which the "male" is annotated in the image data constituting the data set and the number of pieces of image data to which the "presence or absence of a smile" is added as an attribute among the image data in which the "female" is annotated in the image data constituting the data set are displayed side by side. This example shows two bar graphs of the "male" and the "female" each of which indicates the number of pieces of image data on the left.

The number of pieces of image data to which the "race" is added as an attribute among the image data in which the "male" is annotated in the image data constituting the data set and the number of pieces of image data to which the "race" is added as an attribute among the image data in which the "female" is annotated in the image data constituting the data set are displayed side by side. This example shows two bar graphs of the "male" and the "female" each of which indicates the number of pieces of image data near the center.

The number of pieces of image data to which the "age" is added as an attribute among the image data in which the "male" is annotated in the image data constituting the data set and the number of pieces of image data to which the "race" is added as an attribute among the image data in which the "age" is annotated in the image data constituting the data set are displayed side by side. This example shows two bar graphs of the "male" and the "female" each of which indicates the number of pieces of image data near the right.

Displaying in the form of a bar graph enables a user to intuitively recognize whether there is a difference in the number of images of each of the men and women labeled with a certain attribute, that is, whether there is an attribute with bias. Then, the user can intuitively recognize the difference in the number of images, and thus can also intuitively recognize a degree of the bias. The example illustrated in Fig. 4 shows a large difference in the number of images of the "male" and the "female" labeled with the attribute "presence or absence of a smile", so that the user can recognize a large degree of bias of the attribute "presence or absence of a smile".

### (Second display example)

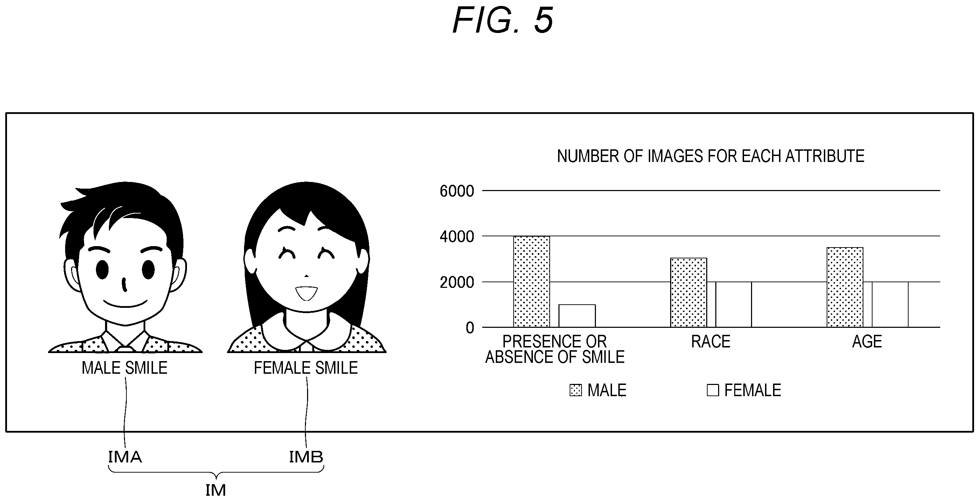

Fig. 5 is a diagram for illustrating a second display example. As illustrated in Fig. 5, the present example also displays a bar graph indicating the number of images for each attribute. This example displays a representative sample image indicating an attribute in addition to the bar graph, for example.

As illustrated in Fig. 5, a sample image IM corresponding to the attribute "presence or absence of a smile" is displayed on the left of the bar graph, for example. Specifically, the sample image IM including a sample image IMA corresponding to a smile of a male and a sample image IMB corresponding to a smile of a female is displayed on the left of the bar graph. Although not illustrated, sample images (e.g., images of males and females of various races) corresponding to the attribute "race", or sample images (e.g., images of males and females of various ages) corresponding to the attribute "age" may be displayed. Additionally, an attribute may be designated by a user operation, and a sample image corresponding to the designated attribute may be displayed.

For data requiring specialized knowledge, such as medical image classification, only indicating the attribute with text information may cause contents of an attribute to be less likely to be recognized. As in the present example, visualizing an attribute with a sample image enables the user to easily recognize contents of the attribute.

### [Display example of bias detection result]

Next, a display example of display information obtained by visualizing a bias detection result acquired by the bias detector 4 will be described. The bias detector 4 quantifies the degree of imbalance for each attribute and displays the quantified degree of imbalance as text information. As the degree of imbalance increases, the degree of bias (e.g., a difference in the number of images) increases. Then, the display example described below may be displayed on the display unit 6A or may be displayed on a display unit provided in a device capable of communicating with the information processing device 1.

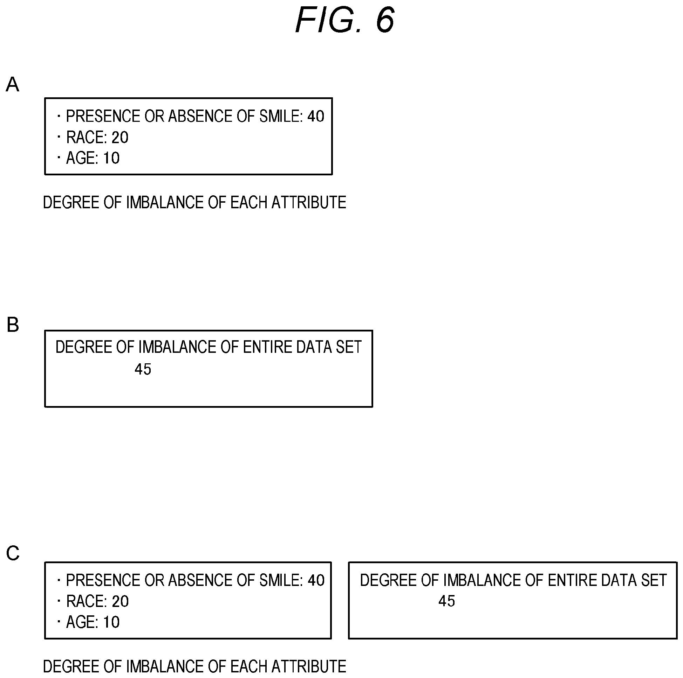

As illustrated in Fig. 6A, "40" is displayed as the degree of imbalance corresponding to the attribute "presence or absence of a smile", "20" is displayed as the degree of imbalance corresponding to the attribute "race", and "10" is displayed as the degree of imbalance corresponding to the attribute "age", for example. As illustrated in Fig. 6B, the degree of imbalance of the entire data set may be displayed. As the degree of imbalance of the entire data set, an average of degrees of imbalance of the respective attributes can be used. Then, only the degree of imbalance of attributes defined by the user may be considered for the average. For a task of the AI model, the task being an automatic attendance discrimination model of a university lecture, for example, bias of age is appropriate. Thus, the average of the degree of imbalance may be calculated by excluding the degree of imbalance of the attribute "age". As illustrated in Fig. 6C, both the degree of imbalance of each attribute and the degree of imbalance of the entire data set may be displayed.

### [Processing of data set adjuster]

Next, a specific example of processing of the data set adjuster will be described. As illustrated in Figs. 4 and 5, when learning is performed using a data set in which a bias exists in an attribute and an AI model generated by the learning is used, a disadvantage occurs in a determination result of the AI model. For example, the three attributes "presence or absence of a smile", "race", and "age" are assumed such that the attribute "presence or absence of a smile" has a degree of imbalance equal to or greater than a predetermined level, and a bias exists in the attribute "presence or absence of a smile". This case may cause an AI model of a gender classification task obtained using a data set without improving bias to classify a female with a smile as a male. Thus, the data set adjuster 5 improves the bias of the data set.

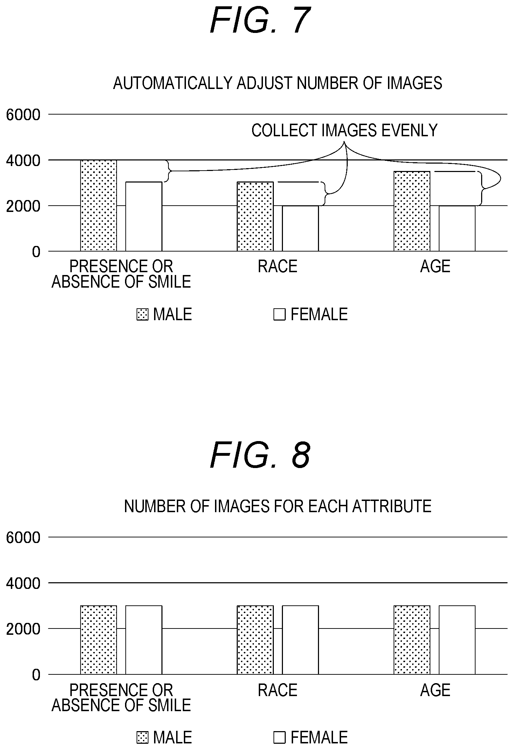

For example, the data set adjuster 5 improves the bias by expanding the data set. As schematically illustrated in Fig. 7, the data set adjuster 5 expands the data set by adding new image data to the data set to cause male images and female images corresponding to each attribute to be equal in number, for example. However, the male images and female images are not necessarily strictly equal in number (identical in number). Examples of the equality include adjustment of the number of pieces of image data, in which the number is adjusted to have a bias with a negligible difference.

New image data is collected manually. For example, a person searches an image database to obtain image data on a female with a smile, and adds the obtained image data to the data set. Although it takes time and effort due to manpower, directionality (characteristics) of image data to be obtained is determined as a "female with a smile", for example. Thus, the image data can be easily collected. As a matter of course, the image data may be collected automatically by a computer instead of manually.

The new image data may be generated image data. For example, the image data may be generated by a learned image generation model (image generator). The new image data also may be image data based on a virtual viewpoint generated on the basis of image data (actual image data) from a real viewpoint. The new image data also may be a combination of the above-described image data.

The data set adjuster 5 may improve the bias by deleting some image data constituting the data set to cause the number of pieces of image data to be equal for each data set. For example, the data set adjuster 5 may delete some image data on the "male" labeled with the attribute "presence or absence of a smile" to cause pieces of the image data on the "male" labeled with the attribute "presence or absence of a smile" and pieces of image data on the "female" labeled with the attribute "presence or absence of a smile" to be equal in number.

Display information obtained by visualizing contents of the data set after improvement in bias may be displayed on the display unit 6A or a display unit of an apparatus capable of communicating with an information processing device 1, for example. For example, information indicating that image data on each of the male and female labeled with each attribute is equal in number, that is, bias has been improved may be displayed in a bar graph format as illustrated in Fig. 8. As a matter of course, text information or the like indicating that a degree of imbalance becomes zero may be displayed instead of the bar graph format.

### [Effects obtained by present embodiment]

According to the information processing device according to the present embodiment, effects below can be obtained, for example.

According to the information processing device according to the present embodiment, bias included in a data set can be improved.

The bias of the data set can be improved regardless of a type of image data constituting the data set.

The bias of the data set can be efficiently improved without requiring processing for improving the bias to be performed multiple times.

The bias can be described in natural language, so that the user easily interprets the bias.

Unlike the related art, the bias of the data set itself can be improved instead of improving the bias by improving the AI model. Improvement of the data set itself can be expected to be improved more in prediction accuracy than improvement of the AI model.

The bias of the data set can be improved without being restricted to subsequent tasks (classification, object recognition, segmentation, etc.).

An attribute in which the bias exists can be automatically detected, and a result of the detection can be presented to the user. The user does not need to preliminarily define an attribute for which a bias is considered to be present. Additionally, even when an attribute of a data set is not known, the attribute can be extracted from the data set.

### <Second embodiment>

Next, a second embodiment will be described. Then, the second embodiment will be described with the same or similar configurations that are denoted by the same reference numerals, and duplicated description will not be appropriately described. Additionally, matters described in the first embodiment can be applied to the second embodiment unless otherwise specified.

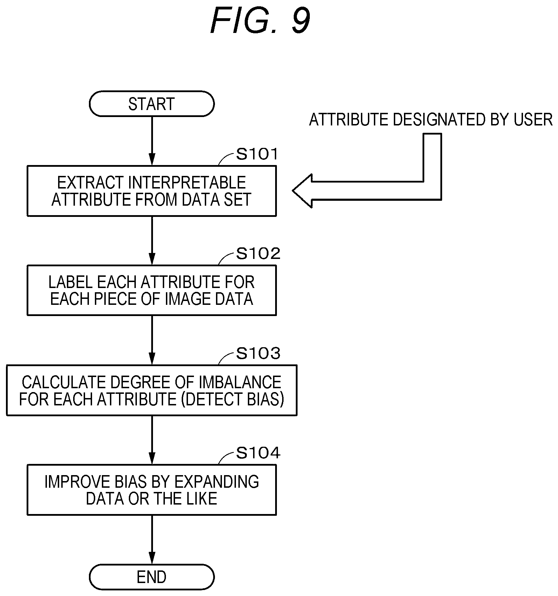

Fig. 9 is a flowchart illustrating a flow of processing performed in the second embodiment. The processing illustrated in Fig. 9 is basically the same as the flow of processing performed by the information processing device 1 described in the first embodiment (see Fig. 3).

The first embodiment allows an attribute to be automatically extracted from a data set using the CLIP2StyleGAN in the processing in step S101. The present embodiment is different from the first embodiment in that a user can designate an attribute. This configuration enables addressing an attribute that cannot be automatically extracted by the CLIP2StyleGAN. For example, labeling of an attribute that cannot be automatically extracted by the CLIP2StyleGAN and detection of bias of the attribute can be performed.

The processing in and after step S102 is similar to that in the first embodiment. For example, attributes labeled by the labeling unit 3 include the attribute designated by the user in step S101. Then, the bias detector 4 detects a bias for at least the attribute designated by the user in step S101 on the basis of the result of labeling performed by the labeling unit 3. The data set adjuster 5 adjusts the data set to improve the bias of the attribute designated by the user, the bias being detected by the bias detector 4.

### <Third embodiment>

Next, a third embodiment will be described. Then, the third embodiment will be described with the same or similar configurations in the above description that are denoted by the same reference numerals, and duplicated description will not be appropriately described. Additionally, matters described in the first and second embodiments can be applied to the third embodiment unless otherwise specified.

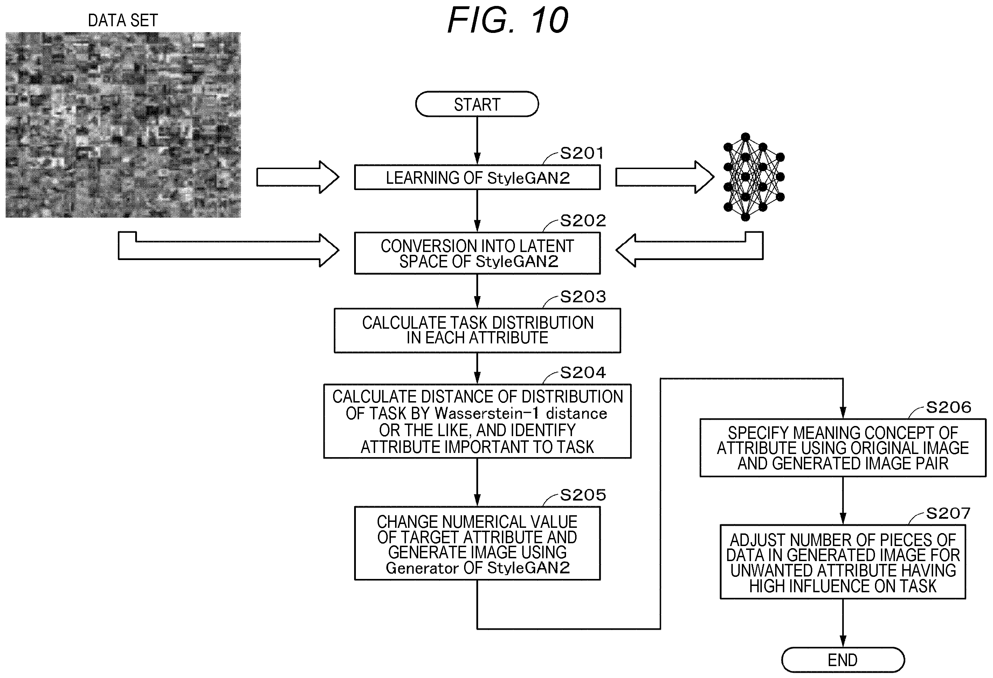

Fig. 10 is a flowchart illustrating a flow of processing performed in the third embodiment. The present embodiment is configured to consistently perform extraction of an attribute with the attribute extractor 2, labeling of an attribute with the labeling unit 3, detection of a bias for each attribute with the bias detector 4, and adjustment of a data set with the data set adjuster 5, using an AI model having learned using a data set.

In step S201, a StyleGAN2 model, which is an example of the AI model, is generated by performing learning using the data set, for example. Then, the processing proceeds to step S202.

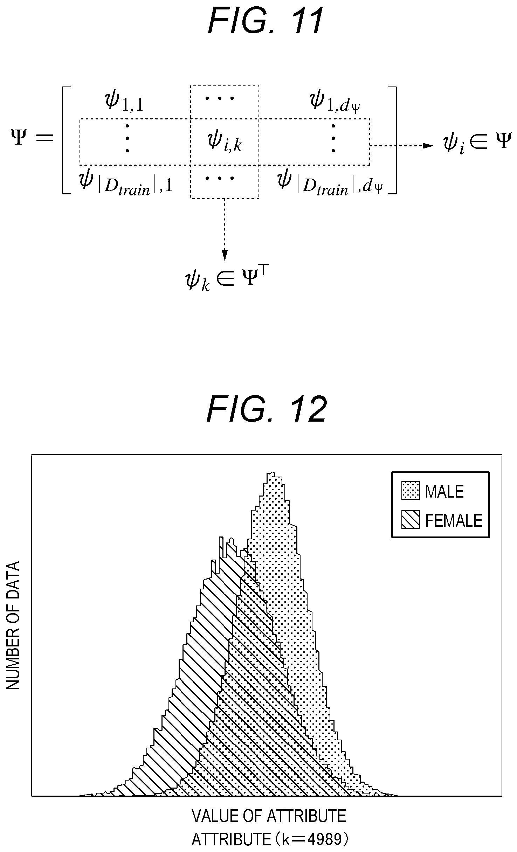

In step S202, the data set is converted into a latent space of the StyleGAN2. After the conversion, the matrix illustrated in Fig. 11 is obtained for each of the male and the female. The matrix illustrated in Fig. 11 includes a row corresponding to the number of learning data (d), and a column corresponding to the number of attributes (k) in the latent space. Then, the processing proceeds to step S203.

In step S203, a distribution of tasks in each attribute is calculated to identify a significant attribute. Fig. 12 illustrates an example of a result of the distribution of the tasks. Fig. 12 shows the distribution (graph) that has a horizontal axis representing a value of the attribute (k = 4989 in this example), and a vertical axis representing a distribution of the number of data. Additionally, the distribution with dots corresponds to the "male", and the distribution with oblique lines corresponds to the "female". Then, the processing proceeds to step S204.

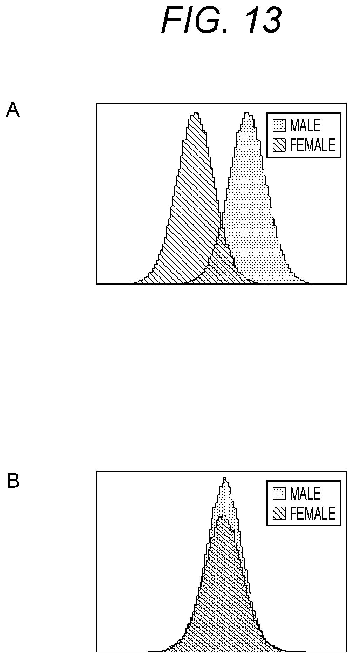

In step S204, a distance of the distribution of the tasks is calculated using "Wasserstein-1 Distance" or the like to identify an important attribute for the tasks. The importance means that a distance among the tasks is far in the distribution. Here, a meaningful dimension is identified from the latent space of the StyleGAN2 by calculating a distance between the distributions. For a small overlap between distributions of the male and the female for a certain attribute as illustrated in Fig. 13A, attributes, such as age and facial expression, can be operated by changing the latent space. In contrast, for a large overlap between distributions as illustrated in Fig. 13B, even an image, in which the latent space is operated, is expected to be close to an original image. (Dimensions do not retain a significant attribute.) Then, the processing proceeds to step S205.

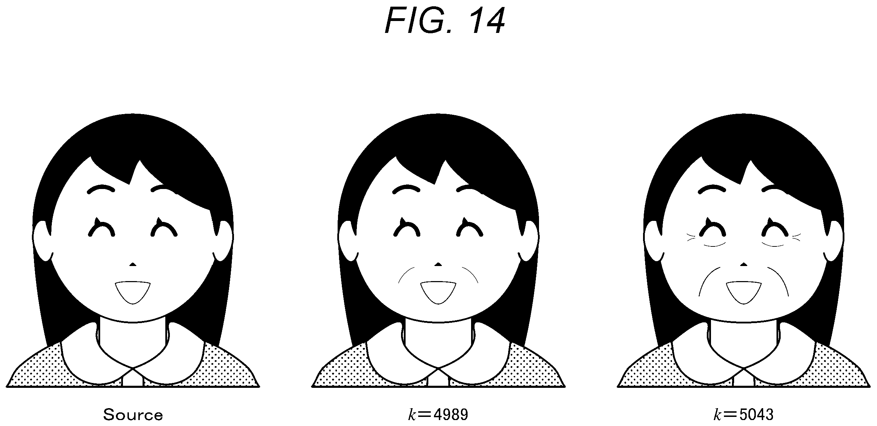

In step S205, images are generated by changing a numerical value of a target attribute using a generator of the StyleGAN2. As illustrated in Fig. 14, the generated images include an image (center image) in which a numerical value of an attribute (k = 4989) is changed with respect to a source image (left image) and an image (right image) in which a numerical value of an attribute (k = 5043) is changed with respect to the source image (left image). Then, the processing proceeds to step S206.

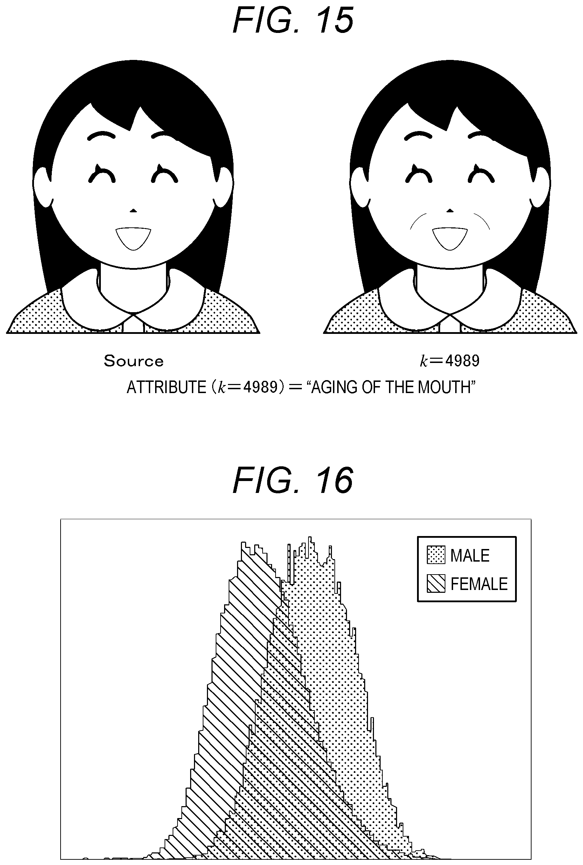

In step S206, a semantic concept of the attribute is specified by the CLIP using a pair of the source image (original image) and the image generated in step S205. For example, the semantic concept of the attribute (k = 4989) is specified as "mouth aging" by using a pair of the source image and the image in which the numerical value of the attribute (k = 4989) is changed, as illustrated in Fig. 15. Each image data is labeled with the attribute for which the semantic concept has been specified. Considerable examples of a method for specifying the semantic concept of the attribute include two methods. A first method is configured to specify a semantic concept of an attribute by performing determination with human eyes. The latent space of the StyleGAN is considered to have mostly meaningless dimensions and a small number of dimensions in which an attribute can be operated, and overlap is also observed in the latent space. Thus, it is considered that labeling determined by human eyes does not take a large number of man-hours. A second method is configured to specify a semantic concept of an attribute using the CLIP2StyleGAN. These methods enable automatically specifying a semantic concept of an attribute. Then, the processing proceeds to step S207.

In step S207, the generator of the StyleGAN2 generates an image for an undesirable attribute that greatly affects a task (e.g., a gender classification task) to adjust the number of pieces of image data and improve the bias.

For example, classifying males and females with an attribute of presence or absence of "glasses" is not applicable for a gender classification task. For the task, image data is generated and adjusted such that the number of images labeled with an attribute "glasses" is equal between males and females. Fig. 16 illustrates a distribution example after the image data adjustment.

The processing described above includes the processing that is performed in step S202 and corresponds to the processing performed by the attribute extractor 2, the processing that is performed in steps S205 and S206 and corresponds to the processing performed by the labeling unit 3 and the bias detector 4, and the processing that is performed in step S207 and corresponds to the processing performed by the data set adjuster 5, for example.

### <Fourth embodiment>

Next, a fourth embodiment will be described. Then, the fourth embodiment will be described with the same or similar configurations in the above description that are denoted by the same reference numerals, and duplicated description will not be appropriately described. Additionally, matters described in the first to third embodiments can be applied to the fourth embodiment unless otherwise specified.

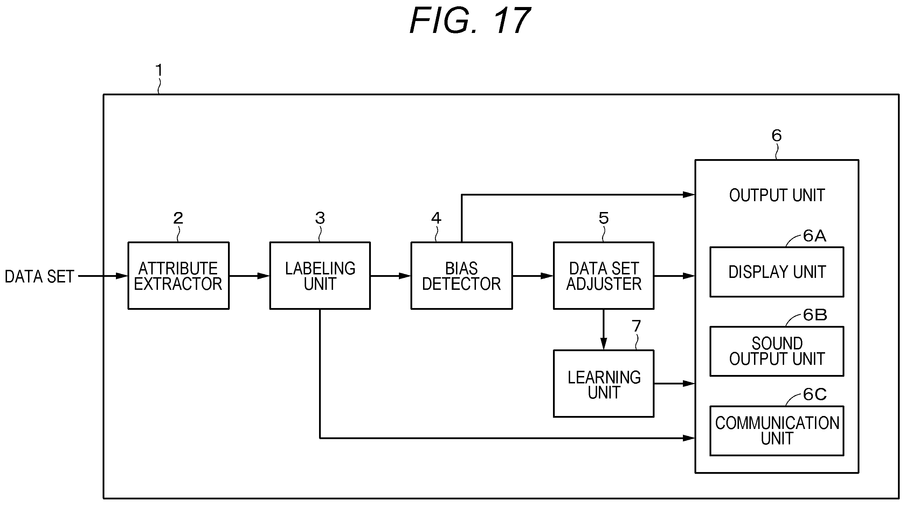

Fig. 17 is a block diagram illustrating a configuration example of an information processing device (information processing device 1A) according to the third embodiment. The information processing device 1A is structurally different from the information processing device 1 in that the information processing device 1A includes a learning unit 7.

The learning unit 7 performs learning using the data set improved in bias by the data set adjuster 5. Such learning allows an AI model corresponding to a predetermined task to be generated. The data set used for the learning is improved in bias, thus preventing an inconvenience in which the generated AI model erroneously recognizes a specific race as an animal or gives a negative evaluation to a specific gender.

Then, the learning unit 7 is not necessarily provided in the information processing device 1A, and may be provided in a user terminal capable of communicating with the information processing device 1A.

### <Fifth embodiment>

Next, a fifth embodiment will be described. Then, the fifth embodiment will be described with the same or similar configurations in the above description that are denoted by the same reference numerals, and duplicated description will not be appropriately described. Additionally, matters described in the first to fourth embodiments can be applied to the fifth embodiment unless otherwise specified.

The first embodiment described above allows the data set adjuster 5 to improve bias for all attributes in which the bias exists (see Fig. 8). However, the bias may be improved for some attributes in which the bias exists instead of all the attributes in which the bias exists. Hereinafter, a bias improvement example according to the present embodiment will be described.

### (First improvement example)

A first improvement example is configured to improve bias equal to or more than a predetermined bias for a certain attribute. For example, when the bias detector 4 detects a degree of imbalance equal to or more than a predetermined value, the data set adjuster 5 determines existence of a bias equal to or more than the predetermined value and performs processing of improving the bias. For a degree of imbalance equal to or less than a predetermined threshold value, bias may not be improved on the assumption that the bias does not greatly affect the generation of the AI model. Consequently, processing can be improved in efficiency.

### (Second improvement example)

A second improvement example is configured to allow the data set adjuster 5 to perform processing of improving at least bias for an attribute designated by the user, in which the bias exists, as in the second embodiment.

### (Third improvement example)

A third improvement example is configured to allow the data set adjuster 5 to perform processing of improving bias for an attribute designated by the user for improvement in the bias. As described in the first embodiment, a result of labeling performed by the labeling unit 3 and a detection result obtained by the bias detector 4 are presented to the user by display or the like. The user designates an attribute for which bias is desired to be improved on the basis of presentation contents.

### (Fourth improvement example)

This example is configured to change an attribute to be improved in bias according to a task content of the AI model. As described above, basically all attributes are preferably improved in bias to suppress erroneous recognition or the like of the AI model. However, no improvement in bias intentionally for a certain attribute is preferable in some cases depending on the task content of the AI model.

For example, an example is considered in which the AI model has a task content of "person recognition in a dark place" that can be applied to a security camera, a camera that images an escalator in a building, or the like, and a "bright background" is extracted or defined by a user as an attribute. Then, it is assumed that a bias exists in the attribute "bright background".

When processing similar to the processing described in the first embodiment is performed for the example described above, the processing is performed to cause the number of pieces of image data to which "bright background" is assigned as the attribute to be equal to the number of pieces of image data to which "bright background" is not assigned as the attribute. However, for the AI model having the task content of the "person recognition in a dark place", the AI model generated by learning with a data set having a large number of pieces of image data to which the "bright background" is not assigned as the attribute, in other words, by learning with a data set with bias, is improved in accuracy with a high possibility. Thus, the data set adjuster 5 does not perform the processing of improving bias for a case where the number of pieces of image data to which the attribute "bright background" is assigned is smaller than the number of pieces of image data to which the attribute is not assigned, that is, image data with a dark background, for example. If the number of pieces of image data to which the attribute "bright background" is assigned is more than the number of pieces of image data to which the attribute "bright background" is not assigned, that is, the number of pieces of image data with a dark background, the data set adjuster 5 may expand the image data to increase the number of pieces of image data, to which the attribute "bright background" is not assigned, to create bias. For example, a person recognition data set existing in advance, in which the data set has a large number of bright backgrounds and a small number of dark backgrounds, is considered to be useful because a data set does not need to be built from zero for dark place recognition.

Then, for the AI model having a task content of a person recognition model in an entrance in which external light is constantly incident or illumination light is emitted, for example, the AI model having learned with a data set with a large number of pieces of image data, to which the attribute "bright background" is assigned, is more improved in accuracy. Thus, the data set adjuster 5 does not perform the processing of improving bias for a case where the number of pieces of image data to which the attribute "bright background" is assigned is larger than the number of pieces of image data to which the attribute is not assigned, that is, image data with a dark background. If the number of pieces of image data to which the attribute "bright background" is assigned is less than the number of pieces of image data to which the attribute "bright background" is not assigned, that is, the number of pieces of image data with a dark background, the data set adjuster 5 may expand the image data to increase the number of pieces of image data, to which the attribute "bright background" is assigned, to create bias.

Then, how to adjust bias of which attribute may be defined by the user according to a task content of the AI model, or may be automatically determined by a predetermined determination unit according to the task content.

Additionally, an ethical attribute is preferably improved in bias even in any of the above improvement examples. The ethical attribute means an attribute from which bias should be excluded from the viewpoint of fairness, and is also referred to as a sensitive attribute. Examples of the ethical attribute include gender, race, age, disability, skin color, nationality, Religion, creed, and medical history. However, even these attributes may not be ethical attributes depending on a task content of the AI model.

### Examples

Next, Examples of the present technology will be described. However, the present technology is not limited to contents of Examples below.

### [Configuration of information processing system]

### (1) General configuration of information processing system

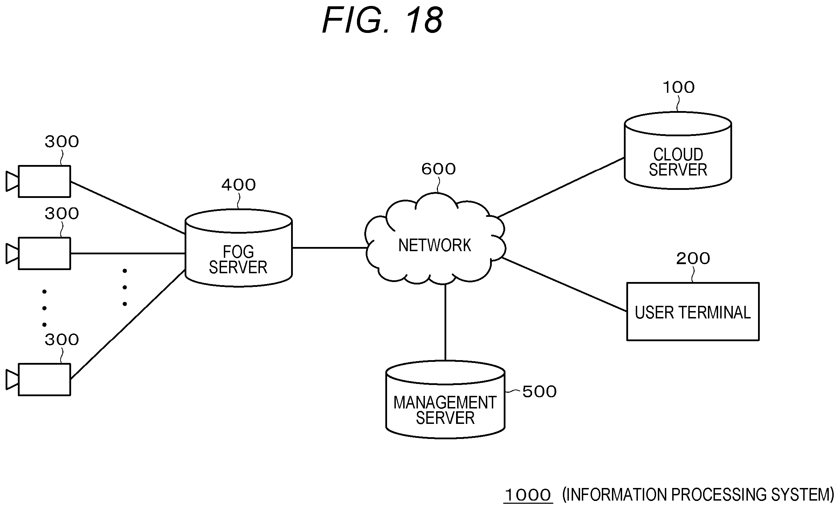

Fig. 18 illustrates an example of a schematic configuration of an information processing system 1000 constituting an imaging device system according to Example. That is, the information processing system 1000 can be an example of a system to which the present technology is applied.

As illustrated in Fig. 18, the information processing system 1000 according to Example includes at least a cloud server 100, a user terminal 200, cameras 300 as a plurality of imaging devices, a fog server 400, and a management server 500. At least the cloud server 100, the user terminal 200, the fog server 400, and the management server 500 are here configured to be able to communicate with each other through a network 600 such as the Internet.

The cloud server 100, the user terminal 200, the fog server 400, and the management server 500 are each configured as an information processing device including a microcomputer including a CPU, a read only memory (ROM), and a random access memory (RAM).

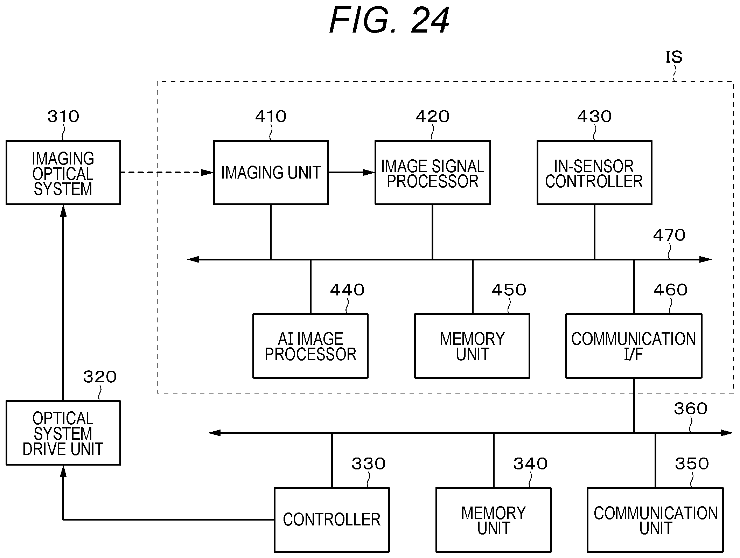

Each of the cameras 300 as an imaging device includes an image sensor such as a charge coupled device (CCD) type image sensor or a complementary metal oxide semiconductor (CMOS) type image sensor. These image sensors constitute an imaging unit (see reference numeral 410 illustrated in Fig. 24). The camera 300 can obtain image information (captured image information) as digital data by imaging a subject. The camera 300 also has a function of performing processing using AI on a captured image. Examples of the processing include image recognition processing and image detection processing.

Here, various types of processing for an image, such as the image recognition processing and the image detection processing, will be simply referred to as "image processing" in description below. For example, various types of processing for an image using AI or an AI model will be described as "AI image processing".

The plurality of cameras 300 is configured to be capable of data communication with the fog server 400. For example, various data such as processing result information indicating a result of image processing or the like using the AI are transmitted from the camera 300 to the fog server 400. The camera 300 also receives various data from the fog server 400.

Here, the information processing system 1000 is assumed to have uses below, for example. First, the fog server 400 or the cloud server 100 generates analysis information on a subject on the basis of the processing result information obtained by image processing of the plurality of cameras 300. The generated analysis information can be browsed by the user using the user terminal 200.

In this case, the plurality of cameras 300 is used as monitoring cameras. Available examples of the monitoring cameras include a monitoring camera that monitors the inside of a store, an office, a house, or the like, and a monitoring camera that monitors the outdoors such as a parking lot, and a town. Examples of the monitoring camera that monitors the outdoors include a traffic monitoring camera that monitors a traffic situation. The camera 300 can be also used as a monitoring camera for monitoring a manufacturing line of factory automation (FA), industrial automation (IA), or the like. The camera 300 can be further used as a monitoring camera for monitoring the inside or outside of a car, a train, or the like.

The plurality of cameras 300 can be each disposed at a predetermined position in a store for use as a monitoring camera in the store. Using the plurality of cameras 300 enables the user to check a customer group (gender, age group, etc.) of customers, actions (traffic lines) of the customers in the store, and the like.

In this case, information on a customer group of a customer, information on a traffic line in a store, information on a congestion state at a checkout register (e.g., waiting time at checkout register), and the like can be generated as the analysis information.

Then, each of a plurality of cameras 300 can be disposed at a position near a road for use as a traffic monitoring camera. Using the plurality of cameras 300 enables the user to recognize information such as numbers (vehicle numbers) of passing vehicles, colors of vehicles, and vehicle types.

In this case, information such as a number, a vehicle color, and a vehicle type can be generated.

Then, the camera 300 can be disposed at a position where a parked vehicle can be monitored for use as a monitoring camera installed in a parking lot. Using the camera 300 enables monitoring whether or not a suspicious person performing suspicious behavior exists around the vehicle, for example. Additionally, a notification device of notifying existence of a suspicious person, an attribute (sex or age group) of the suspicious person, and the like can be provided when the suspicious person exists.

Then, the user can be notified of a place of a space where a vehicle can be parked for use of a monitoring camera that monitors an empty space in a town or a parking lot.

The fog server 400 is disposed in a store to be monitored together with the plurality of cameras 300 for the use of monitoring the store described above, for example. That is, the fog server 400 is disposed for each monitoring target.

When the fog server 400 is disposed for each monitoring target such as a store in this manner, the cloud server 100 does not need to directly receive transmission data from the plurality of cameras 300 in the monitoring target. As a result, a processing load can be reduced in the cloud server 100.

Then, the fog server 400 is preferably disposed for every stores instead of being disposed for each store for a plurality of stores to be monitored, all the stores belonging to the same series. That is, the fog server 400 is not limited to placement in which one fog server 400 is disposed for each monitoring target, and one fog server 400 can be disposed for each of a plurality of monitoring targets.

Then, the cloud server 100 or the plurality of cameras 300 can have functions of the fog server 400 in a case where the cloud server 100 or the plurality of cameras 300 has processing capability or the like. Consequently, the information processing system 1000 can be configured such that the plurality of cameras 300 is directly connected to the network 600 by eliminating the fog server 400 to cause the cloud server 100 to directly receive transmission data from the plurality of cameras 300.

The various devices are roughly divided into cloud-side information processing devices and edge-side information processing devices.

The cloud-side information processing devices correspond to the cloud server 100 and the management server 500. The cloud-side information processing devices constitute a device group that provides a service assumed to be used by a plurality of users.

Then, the edge-side information processing devices correspond to the camera 300 and the fog server 400. The edge-side information processing devices constitute a device group that is prepared by a user using a cloud service and is disposed in an environment.

Alternatively, both the cloud-side information processing devices and the edge-side information processing devices may be disposed in an environment prepared by the same user.

Then, the fog server 400 may serve as an on-premises server.

### (2) Registration of AI model and AI application

As described above, the information processing system 1000 includes the camera 300 that is the edge-side information processing device and that performs the AI image processing. Then, the cloud server 100 constituting the cloud-side information processing devices implements an advanced application function using result information on the AI image processing on the edge side. The result information on the AI image processing is result information acquired by the image recognition processing using AI, for example.

Here, various methods for registering the application function in the cloud server 100 serving as the cloud-side information processing device or the cloud server 100 including the fog server 400 are as follows.

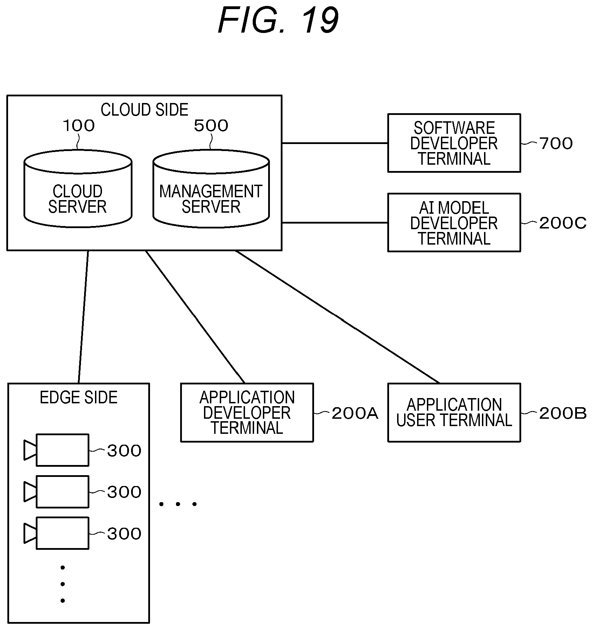

Fig. 19 illustrates a configuration of an example of each device that registers or downloads an AI model or an AI application using a marketplace function provided in the cloud-side information processing devices in the information processing system 1000.

Although Fig. 19 does not illustrate the fog server 400, the fog server 400 may be provided. In this case, the fog server 400 may bear a part of the functions on the edge side.

The cloud server 100 and the management server 500 described above are information processing devices that form environment on the cloud side.

Then, the camera 300 is an information processing device that forms environment on the edge side.

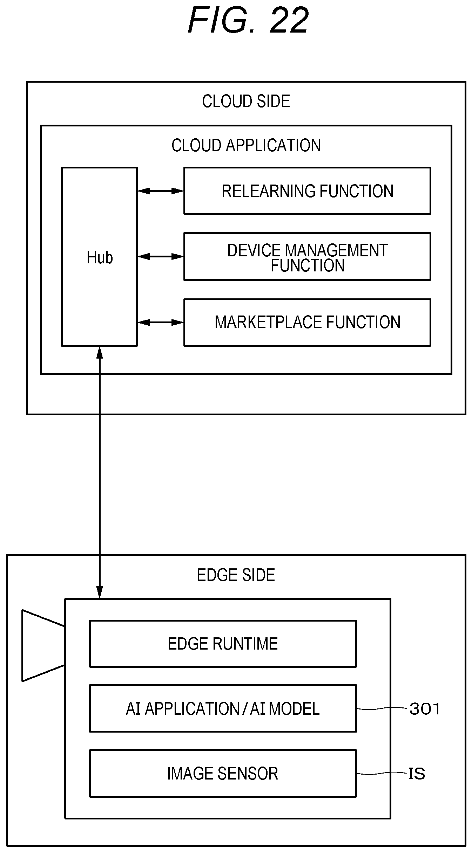

The camera 300 also can be configured as a device including a controller that performs overall control of the camera 300. Alternatively, the camera 300 can be configured as a device including an image sensor IS (see Fig. 22) including an arithmetic processor that performs various types of processing including the AI image processing on a captured image. That is, the image sensor IS, which is another edge-side information processing device, may be mounted inside the camera 300 serving as the edge-side information processing device.

Then, the user terminal 200 used by the user who uses various services provided by the cloud-side information processing devices includes an application developer terminal 200A, an application user terminal 200B, an AI model developer terminal 200C, and the like.

The application developer terminal 200A is used by a user who develops an application used for the AI image processing. The application user terminal 200B is used by a user who uses the application. The AI model developer terminal 200C is used by a user who develops an AI model used for the AI image processing.

Alternatively, the application developer terminal 200A may be used by a user who develops an application without using the AI image processing.

The cloud-side information processing devices are prepared with a data set for learning using AI. The user who develops the AI model communicates with the cloud-side information processing devices using the AI model developer terminal 200C, and downloads the data set for learning (the data sets described in the above-described embodiment).

At this time, the data set for learning may be provided for a fee. For example, the AI model developer may purchase the data set for learning in a state where various functions and materials registered in a marketplace can be purchased by registering personal information in the marketplace (electronic market) prepared as a function on the cloud side.

After developing the AI model using the data set for learning, the AI model developer registers the developed AI model in the marketplace using the AI model developer terminal 200C. Consequently, an incentive may be paid to the AI model developer when the AI model is downloaded.

Then, the user who develops the application downloads the AI model from the marketplace using the application developer terminal 200A, and develops an application (referred to below simply as an "AI application") using the AI model. At this time, an incentive may be paid to the AI model developer as described above.

The user who develops the application registers the developed AI application in the marketplace using the application developer terminal 200A. Consequently, an incentive may be paid to the user who has developed the AI application when the AI application is downloaded.

The user who uses the AI application performs an operation for deploying the AI application and the AI model from the marketplace to the camera 300 as the edge-side information processing device managed by the user using the application user terminal 200B. At this time, an incentive may be paid to the AI model developer.

Consequently, the camera 300 can perform the AI image processing using the AI application and the AI model. Specifically, the camera 300 can not only capture an image but also detect a customer and a vehicle by the AI image processing.

Here, the deploying the AI application and the AI model indicates that the AI application and the AI model are installed on a target as an execution subject to allow the target (device) as the execution subject to use the AI application and the AI model. The deployment further includes installation into the target as the execution subject to allow at least some programs as the AI application to be executed.

Then, the camera 300 may be capable of extracting attribute information on a customer from a captured image captured by the camera 300 by the AI image processing.

The attribute information described above is transmitted from the camera 300 to the cloud-side information processing devices through the network 600.

In the cloud-side information processing devices, a cloud application is deployed. Each user can use the cloud application through the network 600. Then, an application or the like for analyzing a traffic line of a customer using attribute information on the customer or a captured image of the customer is prepared in the cloud application. The cloud application described above receives an application that is uploaded by a development user or the like.

The user using the application uses the cloud application for traffic line analysis using the application user terminal 200B. Consequently, the user can perform traffic line analysis of a customer in its own store and browse an analysis result of the analysis. The browsing of the analysis result refers to browsing of a traffic line of a customer, the traffic line being graphically presented on a map of the store, for example.

Alternatively, the analysis result may be browsed by displaying the result of the traffic line analysis in the form of a heat map and presenting density or the like of customers.

Then, information on the results may be sorted in display for each piece of attribute information of a customer.

A cloud-side marketplace may register an AI model optimized for each user. For example, a captured image captured by the camera 300 disposed in a store managed by a certain user is appropriately uploaded and accumulated in the cloud-side information processing devices.

The cloud-side information processing devices perform relearning processing of the AI model every time a certain number of uploaded captured images are accumulated, thereby performing processing of updating the AI model and registering the AI model again in the marketplace.

Alternatively, the relearning processing of the AI model may be selected as an option by the user on the marketplace, for example.

For example, the AI model relearned using a dark image from the camera 300 disposed in the store is deployed in the camera 300. Consequently, a recognition rate or the like of image processing for a captured image captured in a dark place can be improved. Then, the AI model relearned using a bright image from the camera 300 disposed outside the store is deployed in the camera 300. Consequently, a recognition rate or the like of image processing for an image captured in a bright place can be improved.

That is, the user who uses the application can obtain processing result information that is always optimized by deploying the updated AI model again in the camera 300.

Then, the relearning processing of the AI model will be described again.

Additionally, when information uploaded from the camera 300 to the cloud-side information processing devices (e.g., information on a captured image or the like) includes personal information, data from which information regarding privacy has been deleted may be uploaded from the viewpoint of privacy protection. The data from which the information regarding privacy has been deleted may be made available to the user who develops the AI model or the user who develops the application.

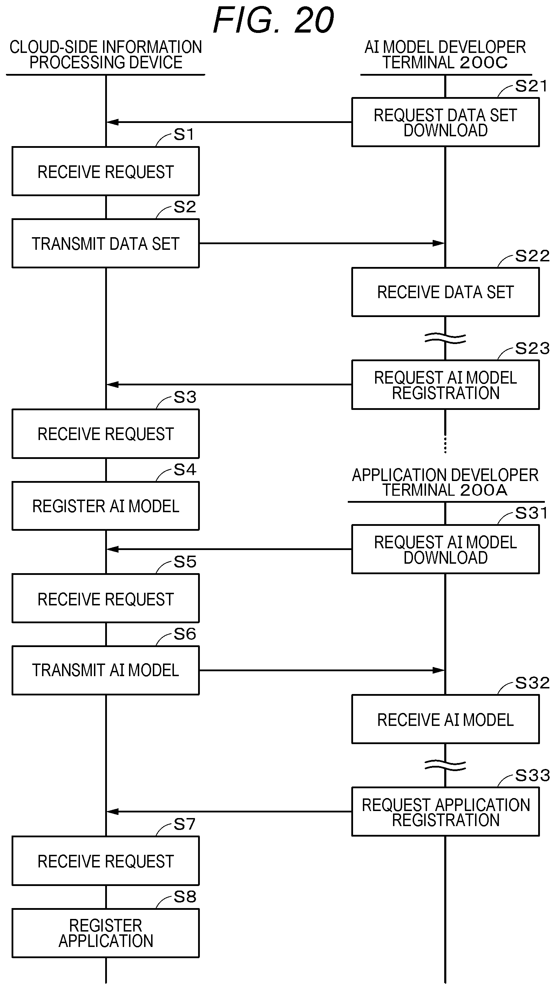

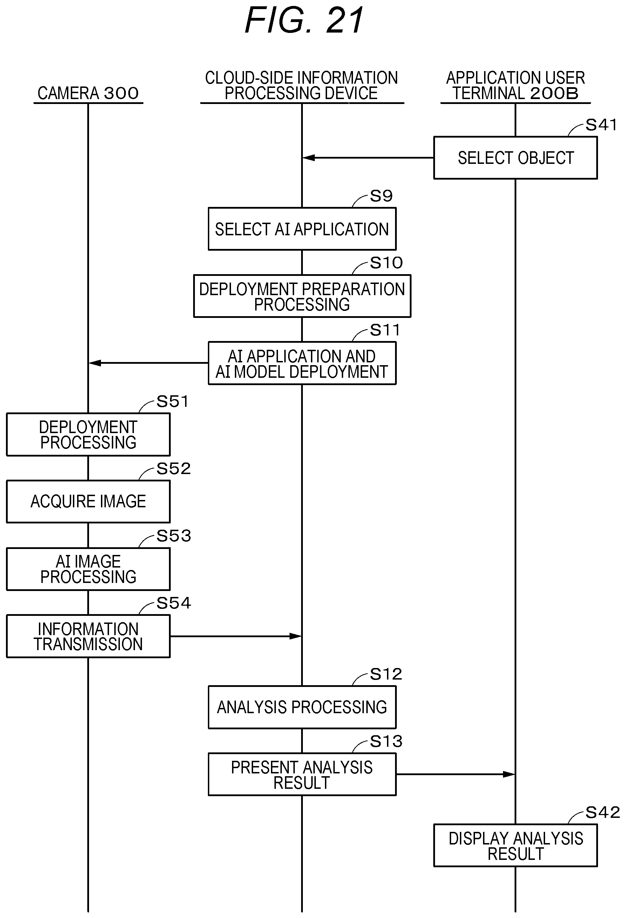

Figs. 20 and 21 are each a flowchart of an example illustrating a flow of the above-described processing.

Then, the cloud-side information processing devices correspond to the cloud server 100, the management server 500, and the like illustrated in Fig. 18.

The AI model developer browses a list of data sets registered in the marketplace using the AI model developer terminal 200C including a display unit including an LCD, an organic EL panel, or the like. When the AI model developer selects a desired data set, the AI model developer terminal 200C transmits a download request of the selected data set to the cloud-side information processing devices according to the selection (step S21).

The cloud-side information processing devices receive the request (step S1). The cloud-side information processing devices perform processing of transmitting the requested data set to the AI model developer terminal 200C (step S2).

The AI model developer terminal 200C performs processing of receiving the data set (step S22). Consequently, the AI model developer can develop the AI model using the data set.

After the AI model developer completes development of the AI model, the AI model developer performs an operation for registering the developed AI model in the marketplace. This operation is an operation of designating a name of the AI model, an address at which the AI model is placed, and the like, for example. Consequently, the AI model developer terminal 200C transmits a registration request of the AI model in the marketplace to the cloud-side information processing devices (step S23).

The cloud-side information processing devices receive the registration request (step S3). The cloud-side information processing devices perform registration processing of the AI model (step S4). The cloud-side information processing devices can display the AI model on the marketplace, for example. Consequently, a user other than the AI model developer can download the AI model from the marketplace.

For example, an application developer who intends to develop an AI application browses a list of AI models registered in the marketplace using the application developer terminal 200A. The application developer terminal 200A transmits a download request of the selected AI model to the cloud-side information processing devices in response to operation of the application developer (step S31). The operation here is performed to select one of the AI models on the marketplace, for example.

The cloud-side information processing devices receive the request (step S5) and transmit the AI model to the application developer terminal 200A (step S6).

The application developer terminal 200A receives the AI model (step S32). Consequently, the application developer can develop an AI application using an AI model developed by another person.

After completing the development of the AI application, the application developer performs an operation for registering the AI application in the marketplace. This operation is performed to designate a name of the AI application, and an address at which the AI model is placed, for example. Consequently, the application developer terminal 200A transmits a registration request of the AI application to the cloud-side information processing devices (step S33).

The cloud-side information processing devices receive the registration request (step S7). The cloud-side information processing devices register the AI application (step S8). The cloud-side information processing devices can display the AI application on the marketplace, for example. Consequently, a user other than the application developer can select and download the AI application on the marketplace.

For example, a user who intends to use the AI application performs purpose selection using the application user terminal 200B (step S41) as illustrated in Fig. 21. The purpose selection is performed to transmit the selected purpose to the cloud-side information processing devices.

Upon receiving the purpose, the cloud-side information processing devices select an AI application suitable for the purpose (step S9). Then, the cloud-side information processing devices perform preparation processing (deployment preparation processing) for deploying the AI application and the AI model to each device (step S10).

The deployment preparation processing performs determination or the like of the AI model according to information on a device targeted for the deployment processing of the AI mode or the AI application, such as information on the camera 300 or the fog server 400, or performance required by the user.

The deployment preparation processing also performs determination of a device that executes corresponding software (SW) components constituting an AI application for implementing a function desired by the user on the basis of performance information on each device and request information of the user.

Each SW component may be a container to be described later or may be a microservice. Then, the SW component can also be implemented by using a web assembly technology.

An AI application for counting the number of customers for each attribute such as gender or age includes a SW component that detects a face of a person from a captured image using an AI model. Additionally, the AI application further includes a SW component that extracts attribute information on a person from a detection result of the face, a SW component that aggregates results, a SW component that visualizes the aggregation result, and the like.

Some examples of the deployment preparation processing will be described again.

The cloud-side information processing devices perform processing of deploying each SW component in corresponding one of the devices (step S11). This processing is performed to transmit the AI application and the AI model to each device such as the camera 300.

In response to the processing, the camera 300 performs the deployment processing of the AI application and the AI model is performed (step S51). Consequently, AI image processing can be performed on the captured image captured by the camera 300.

Then, although not illustrated in Fig. 21, the fog server 400 similarly performs the deployment processing of the AI application and the AI model as necessary.

However, the deployment processing for the fog server 400 is not performed for the camera 300 that performs every processing.

The camera 300 acquires an image by performing an imaging operation (step S52). Then, the camera 300 performs the AI image processing on the acquired image, and obtains an image recognition result, for example (step S53).

The camera 300 further performs transmission processing of the captured image and result information on the AI image processing (step S54). The transmission of the information in step S54 may include transmission of both the captured image and the result information on the AI image processing. Alternatively, only one of the captured image and the result information may be transmitted.

The cloud-side information processing devices having received the information described above perform analysis processing (step S12). This analysis processing is performed for traffic line analysis of a customer and vehicle analysis for traffic monitoring, for example.

The cloud-side information processing devices perform presentation processing of an analysis result (step S13). This processing is implemented by the user who uses the cloud application described above, for example.

Upon receiving the analysis result subjected to the presentation processing, the application user terminal 200B performs processing of displaying the analysis result on a monitor or the like (step S42).

Once the processing up to here is completed, the user who uses the AI application can obtain the analysis result corresponding to the purpose selected in step S41.

Then, the cloud-side information processing devices may update the AI model after step S13. Updating and deploying the AI model enables obtaining an analysis result suitable for environment used by the user.

### (3) Functional overview of system

Example assumes a service using the information processing system 1000, in which a user as a customer can select a type of function for the AI image processing of the plurality of cameras 300. Examples of the selection of the type of function include selection in which an image recognition function, an image detection function, or the like is selected, and selection in which a more detailed type is selected to exhibit an image recognition function, an image detection function, or the like for a specific subject.

For example, a business model is presented in which a service provider sells the camera 300 and the fog server 400 having an image recognition function using an AI to the user, and causes the camera 300 and the fog server 400 to be installed at respective places to be monitored. Then, the service provider deploys a service that provides the user with the analysis information as described above.

At this time, a use required for the system is different for each customer, such as a use of store monitoring or a use of traffic monitoring. For this reason, the AI image processing function of the camera 300 can be selectively set to obtain analysis information corresponding to the use desired by the customer.

Example presents the management server 500 that has a function of selectively setting such an AI image processing function of the camera 300.

Alternatively, the cloud server 100 or the fog server 400 may have the function of the management server 500.

Fig. 22 illustrates an example of a connection mode between the cloud server 100 and the management server 500, which are the cloud-side information processing devices, and the camera 300, which is one of the edge-side information processing devices.

As illustrated in Fig. 22, the cloud-side information processing devices are equipped with a relearning function, a device management function, and a marketplace function, which are functions available through a hub.

The Hub performs highly reliable communication protected by security for the edge-side information processing devices. Consequently, various functions can be provided to the edge-side information processing devices.

The relearning function is used to perform relearning and provide a newly optimized AI model. This function provides an appropriate AI model based on the new learning material.

The device management function is used to manage the camera 300 and the like as the edge-side information processing devices. For example, the device management function manages and monitors the AI model deployed in the camera 300, and provides functions such as problem detection and troubleshooting.

The device management function is also used to manage information on the camera 300 and the fog server 400. The information on the camera 300 and the fog server 400 includes information on a chip used as an arithmetic processor, information on a memory capacity and a storage capacity, information on a usage rate or the like of a CPU and a memory, and the like. The information further includes information on software such as an operating system (OS) installed in each device.

The device management function further protects secure access by authenticated users.

The marketplace function provides a function of registering the AI model developed by the developer of the AI model described above and the AI application developed by the developer of the application, a function of deploying these developments to the edge-side information processing devices having been permitted, and the like. The marketplace function also provides a function related to payment of an incentive according to deployment of a development.

The camera 300 as the edge-side information processing device includes an edge runtime, an AI application and an AI model, and an image sensor IS.

The edge runtime functions as embedded software or the like for managing an application deployed in the camera 300 and communicating with the cloud-side information processing devices.

The AI model is obtained by deploying the AI model registered in the marketplace in the cloud-side information processing devices as described above. Consequently, the camera 300 can obtain result information on the AI image processing suitable for the purpose using the captured image.

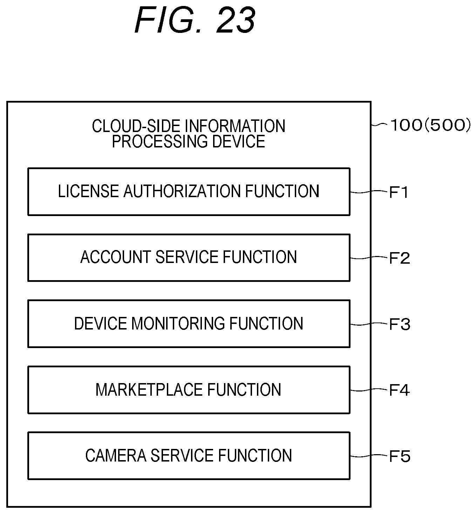

Fig. 23 illustrates an example of functions of the cloud-side information processing devices. Then, the cloud server 100, the management server 500, and the like are collectively referred to as the cloud-side information processing devices.

As illustrated in Fig. 23, the cloud-side information processing devices include a license authorization function F1, an account service function F2, a device monitoring function F3, a marketplace function F4, and a camera service function F5.

The license authorization function F1 is for performing processing related to various types of authentication. Specifically, the license authorization function F1 is performed in which processing related to device authentication of the plurality of cameras 300 and processing related to authentication of each of the AI model, software, and firmware used in the camera 300 are performed.

Here, the software described above is necessary for appropriately implementing the AI image processing in the camera 300.

Then, control of data input to the AI model and appropriate processing of output data of the AI model are required to appropriately perform the AI image processing based on a captured image and transmit a result of the AI image processing to the fog server 400 and the cloud server 100 in an appropriate format. The software described above includes peripheral processing necessary for appropriately implementing the AI image processing. Such software is for implementing a desired function using an AI model, and thus corresponds to the AI application described above.

Then, the AI application is not limited to use of only one AI model, and may use two or more AI models. For example, an AI application may be formed having a flow of processing in which information on a recognition result is obtained by an AI model that performs the AI image processing with a captured image as input data, and the information is input to another AI model that performs second AI image processing on the information. Here, the information on the recognition result is image data or the like, and is referred to below as "recognition result information".

The license authorization function F1 performs processing of issuing a device identification (ID) for each camera 300 for authentication of the camera 300 for connection to the camera 300 through the network 600.

Then, for authentication of the AI model and the software, processing of issuing a unique ID is performed for each of the AI model and the AI application applied for registration from the AI model developer terminal 200C or a software developer terminal 700. The unique ID is an AI model ID, a software ID, or the like.

The license authorization function F1 also performs processing of issuing various keys, certificates, and the like for enabling secure communication between each of the camera 300, the AI model developer terminal 200C, and the software developer terminal 700, and the cloud server 100 to a manufacturer of the camera 300 (particularly, a manufacturer of the image sensor IS to be described later), an AI model developer, and a software developer. Additionally, the license authorization function F1 performs processing for updating or stopping proof validity.

The license authorization function F1 further performs processing of associating the camera 300 (the device ID) purchased by the user with a user ID when user registration is performed by the account service function F2 described below. Here, the user registration is registration of account information accompanied by issuance of the user ID.

The account service function F2 is of generating and managing account information on the user. The account service function F2 accepts input of user information, and generates the account information on the basis of the user information having been input. Here, the account information including at least the user ID and password information is generated.

The account service function F2 also performs registration processing (registration of account information) for the AI model developer and the developer of the AI application software (also abbreviated below as "software developer").

The device monitoring function F3 is of performing processing for monitoring a use state of the camera 300. For example, the monitoring is performed for a use place of the camera 300, and information on a usage rate of the CPU and the memory described above as various elements related to the use state of the camera 300, such as an output frequency of output data of the AI image processing, and a free space of the CPU and the memory used for the AI image processing.

The marketplace function F4 is for selling an AI model and an AI application. For example, the user can purchase an AI application and an AI model used by the AI application through a sales WEB site (sales site) provided by the marketplace function F4. Additionally, the software developer can purchase the AI model for creating the AI application through the sales site described above.

The camera service function F5 is for providing a user with a service related to use of the camera 300.

Examples of the camera service functions F5 include a function related to generation of the analysis information described above. That is, the function constituting the camera service function F5 is of performing processing in which analysis information on a subject is generated on the basis of the processing result information on the image processing in the camera 300 and the user is caused to browse the generated analysis information through the user terminal 200.

The camera service function F5 also includes an imaging setting search function. Specifically, this imaging setting search function acquires the recognition result information on the AI image processing from the camera 300, and searches the imaging setting information on the camera 300 using an AI on the basis of the acquired recognition result information. Here, the imaging setting information is setting information related to the imaging operation for obtaining a captured image. Examples of the specific setting information include at least optical setting information such as a focus and a diaphragm, setting information related to a readout operation of a captured image signal such as a frame rate, an exposure time, and a gain, and setting information related to image signal processing on the read captured image signal, such as gamma correction processing, noise reduction processing, or super-resolution processing.

The camera service function F5 further includes an AI model search function. The AI model search function acquires recognition result information on the AI image processing from the camera 300, and searches for an optimal AI model used for the AI image processing in the camera 300 using an AI on the basis of the acquired recognition result information. Here, the search of the AI model means processing of optimizing various processing parameters such as a weighting factor, setting information (including information such as a kernel size) related to a neural network structure, and the like for the AI image processing implemented by a convolutional neural network (CNN) including a convolution operation, for example.

Additionally, the camera service function F5 includes a processing sharing determination function. The processing sharing determination function performs processing of determining a deployment destination device in units of SW components as the deployment preparation processing described above when the AI application is deployed in the edge-side information processing devices. Then, some SW components may be determined to be performed in a cloud-side device. This configuration may allow the deployment processing not to be performed on the assumption that the some SW components have already been deployed in the cloud-side device.

For example, the camera service function F5 performs determination below for an AI application including an SW component that detects a face of a person, an SW component that extracts attribute information on the person, an SW component that aggregates an extraction result, and an SW component that visualizes the aggregation result, as in the example described above.

The SW component that detects the face of the person is determined to be deployed to the image sensor IS of the camera 300 as the deployment destination device. The SW component that extracts the attribute information on the person is determined to be deployed to the camera 300 as the deployment destination device. The SW component that aggregates the extraction result is determined to be deployed to the fog server 400 as the deployment destination device. Then, the SW component that visualizes the aggregation result is determined to be executed in the cloud server 100 without being newly deployed to a device.

The camera service function F5 determines the deployment destination of each SW component as described above, thus determining processing sharing in each device.

Then, the processing sharing is determined in consideration of specifications and performance of each device and a request of the user.

Providing the imaging setting search function and the AI model search function as described above enables not only performing imaging setting that improves a result of the AI image processing, but also performing the AI image processing using an appropriate AI model suitable for an actual use environment.

Besides this, providing the processing sharing determination function enables performing the AI image processing and the analysis processing thereof in a device suitable for the AI image processing and the analysis processing thereof.

Then, the camera service function F5 has an application setting function prior to deploying each SW component. The application setting function sets an appropriate AI application according to a purpose of the user.

For example, an appropriate AI application is selected once the user selects use such as store monitoring or traffic monitoring. Consequently, the SW component constituting the AI application is naturally determined.

Although described later, there may be a plurality of types of combinations of SW components for achieving the purpose of the user using the AI application. In this case, one combination of the SW components is selected according to information on the edge-side information processing devices or a request of the user.

For example, for the user intending to monitor a store, the combination of the SW components may be different depending on whether a request of the user is focused on privacy or speed.

The application setting function performs processing in the user terminal 200 (this corresponds to the application user terminal 200B illustrated in Fig. 19), the processing including processing of receiving an operation in which the user selects a purpose (application), processing of selecting an appropriate AI application according to the selected application, and the like.

Here, the above description shows an example of a configuration of the cloud server 100 alone in which the license authorization function F1, the account service function F2, the device monitoring function F3, the marketplace function F4, and the camera service function F5 are implemented. These functions can be shared and implemented by a plurality of information processing devices. For example, each of the plurality of functions described above may be performed by one information processing device. Alternatively, a single function among the above-described functions may be shared by a plurality of information processing devices. For example, a single function may be shared by the cloud server 100 and the management server 500.

The AI model developer terminal 200C illustrated in Fig. 19 is an information processing device used by the developer of the AI model.

Then, the software developer terminal 700 is an information processing device used by a developer of an AI application.

### (4) Configuration of imaging device

Fig. 24 illustrates an example of an internal configuration of the camera 300.

As illustrated in Fig. 24, the camera 300 includes an imaging optical system 310, an optical system drive unit 320, an image sensor IS, a controller 330, a memory unit 340, and a communication unit 350. The image sensor IS, the controller 330, the memory unit 340, and the communication unit 350 are connected to each other through a bus 360 to enable data communication with each other through the bus 360.

The imaging optical system 310 includes lenses such as a cover lens, a zoom lens, and a focus lens, and a diaphragm (iris) mechanism. The imaging optical system 310 guides light (incident light) from a subject to condense the light on a light receiving surface of the image sensor IS.

The optical system drive unit 320 comprehensively represents a drive unit of the zoom lens, the focus lens, and the diaphragm mechanism provided in the imaging optical system 310. Specifically, the optical system drive unit 320 includes an actuator for driving each of the zoom lens, the focus lens, and the diaphragm mechanism, and a drive circuit of the actuator.

The controller 330 includes a microcomputer including a CPU, a ROM, and a RAM, for example, and controls the whole of the camera 300 by causing the CPU to perform various types of processing according to a program stored in the ROM or a program loaded in the RAM.

Then, the controller 330 instructs the optical system drive unit 320 to drive the zoom lens, the focus lens, the diaphragm mechanism, and the like. The optical system drive unit 320 drives the focus lens and the zoom lens for movement, and the diaphragm mechanism for opening and closing of its diaphragm blade, for example, in response to the driving instruction described above.

The controller 330 also controls write operation and read operation of various data for the memory unit 340.

The memory unit 340 includes a non-volatile storage device such as a hard disk drive (HDD) or a flash memory device, for example. The memory unit 340 is used as a storage destination (recording destination) of image data output from the image sensor IS.

The controller 330 further performs various types of data communication with an external device through the communication unit 350. The communication unit 350 in Example is capable of data communication with at least the fog server 400 (or the cloud server 100) illustrated in Fig. 18.

The image sensor IS is configured as an image sensor such as a CCD or a CMOS, for example.

The image sensor IS includes an imaging unit 410, an image signal processor 420, an in-sensor controller 430, an AI image processor 440, a memory unit 450, and a communication I/F 460. These components are connected through a bus 470 to be capable of data communication with each other.

The imaging unit 410 includes a pixel array unit in which a plurality of pixels is two-dimensionally arranged, and a read-out circuit. The pixels each include a photoelectric conversion element such as a photodiode. The read-out circuit reads out an electric signal obtained by photoelectric conversion from each pixel of the pixel array unit. The imaging unit 410 outputs the obtained electric signal as a captured image signal.

The read-out circuit performs correlated double sampling (CDS) processing, automatic gain control (AGC) processing, and the like on the electric signal obtained by photoelectric conversion, and further performs analog/digital (A/D) conversion processing, for example.

The image signal processor 420 performs preprocessing, synchronization processing, YC generation processing, resolution conversion processing, codec processing, and the like on the captured image signal as digital data after the A/D conversion processing.

The preprocessing performs clamp processing of clamping black levels of R, G, and B to a predetermined level, correction processing among color channels of R, G, and B, and the like on the captured image signal.

The synchronization processing performs color separation processing of causing image data for each pixel to have all color components of R, G, and B. For example, demosaic processing is performed as the color separation processing for an imaging element using a Bayer array color filter.

The YC generation processing generates (separates) a luminance (Y) signal and a color (C) signal from the image data of R, G, and B. The resolution conversion processing is performed on the image data subjected to various types of signal processing.

The codec processing performs encoding processing for recording or communication on the image data subjected to the above-described various types of processing, and generates a file, for example. The codec processing can generate a file in a format such as moving picture experts group (MPEG)-2 or H.264 as a video file format, for example. Additionally, a file in a format such as joint photographic experts group (JPEG), tagged image file format (TIFF), graphics interchange format (GIF), or the like can be generated as a file of a still image.

The in-sensor controller 430 instructs the imaging unit 410 and controls execution of the imaging operation. Similarly, the in-sensor controller 430 also controls execution of processing for the image signal processor 420.

The AI image processor 440 performs the image recognition processing as the AI image processing on the captured image.

The image recognition function using the AI can be implemented using a programmable arithmetic processing device such as a CPU, a field programmable gate array (FPGA), or a digital signal processor (DSP).

The image recognition function that can be implemented in the AI image processor 440 can be switched by changing an algorithm of the AI image processing. In other words, a function type of the AI image processing can be switched by switching the AI model used for the AI image processing. Examples of the function type of the AI image processing are as follows.
· Class identification
· Semantic segmentation
· Person detection
· Vehicle detection
· Target tracking
· Optical character recognition (OCR)

Among the above function types, the class identification is a function of identifying a class oaf a target. The "class" is information indicating a category of an object. For example, the class is a classification of "person", "car", "airplane", "ship", "truck", "bird", "cat", "dog", "deer", "frog", "horse", or the like.

The target tracking is a function of tracking a target subject. In other words, the target tracking is a function of obtaining history information on a position of the subject.

The memory unit 450 is used as a storage destination of various data such as captured image data obtained by the image signal processor 420. The memory unit 450 in Example is also used for temporary storage of data used by the AI image processor 440 in a process of the AI image processing.

The memory unit 450 also stores information on the AI application and the AI model used in the AI image processor 440.

Then, the information on the AI application and the AI model may be deployed in the memory unit 450 as a container or the like using a container technology to be described later. The information on the AI application and the AI model may be also deployed using a microservice technology. Deploying the AI model used for the AI image processing in the memory unit 450 enables changing the function type of the AI image processing or changing the AI model to an AI model improved in performance by relearning.

Then, Example described above has been described on the basis of an example of the AI model and the AI application used for image recognition. Besides this, a program or the like executed using an AI technology may be a target in the present technology.

Additionally, for storing the information on the AI application and the AI model in the memory unit 450 with a small capacity, only the AI model may be stored in the memory unit 450 in the image sensor IS through the communication I/F460 described below after the memory unit 340 or the like is deployed as a container or the like in a memory outside the image sensor IS by using the container technology.

The communication I/F 460 communicates with the controller 330, the memory unit 340, and the like outside the image sensor IS. The communication I/F 460 performs communication for acquiring a program to be executed by the image signal processor 420, an AI application to be used by the AI image processor 440, an AI model, and the like from the outside. These pieces of information are stored in the memory unit 450 provided in the image sensor IS.

Consequently, the AI model and the like are stored in a part of the memory unit 450 provided in the image sensor IS, and can be used by the AI image processor 440.

The AI image processor 440 recognizes the subject according to the purpose by performing predetermined image recognition processing using the AI application or the AI model obtained as described above.

Information on a recognition result of the AI image processing is output to the outside of the image sensor IS through the communication I/F 460.

That is, the communication I/F 460 of the image sensor IS outputs not only the image data output from the image signal processor 420 but also the information on the recognition result of the AI image processing.

Alternatively, the communication I/F 460 of the image sensor IS can output only one of the image data and the information on the recognition result.

For example, to use the relearning function of the AI model, captured image data used for the relearning function is uploaded from the image sensor IS to the cloud-side information processing devices through the communication I/F 460 and the communication unit 350.

Then, to make an inference using an AI model, the information on the recognition result of AI image processing is output from the image sensor IS to another information processing device outside the camera 300 through the communication I/F 460 and the communication unit 350.

The image sensor IS includes composed of various structures. Example will be described about a configuration of the image sensor IS with a structure in which two layers are stacked.

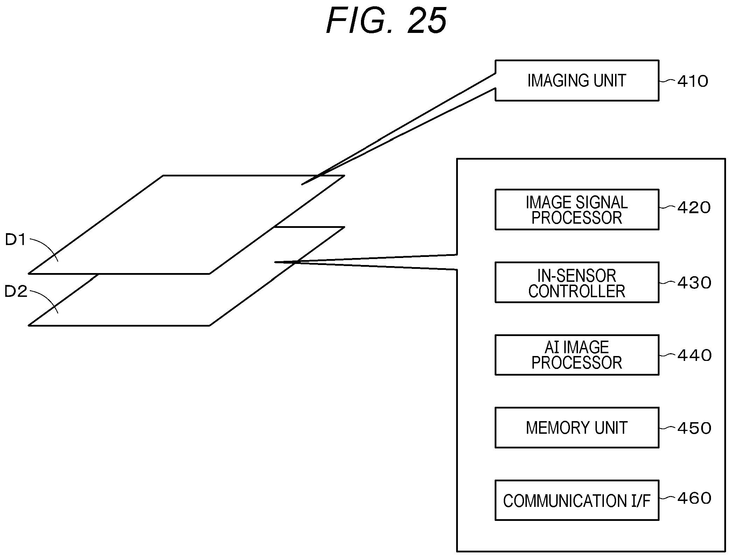

Fig. 25 illustrates an example of the configuration of the image sensor IS as an imaging device.

As illustrated in Fig. 25, the image sensor IS includes composed of a semiconductor device configured as one semiconductor chip by stacking a die D1 and a die D2 as two semiconductor chips.

The die D1 has a function as the imaging unit 410 illustrated in Fig. 24. The die D2 has respective functions of the image signal processor 420, the in-sensor controller 430, the AI image processor 440, the memory unit 450, and the communication I/F 460.

The die D1 and the die D2 have respective surfaces that face each other and that include terminals. The terminals each include copper (Cu) as a wiring material, for example. That is, the die D1 and the die D2 are electrically connected to each other by Cu-Cu bonding in which the terminals are bonded.

For a method for deploying an AI model, an AI application, and the like in the camera 300, an example using a container technology will be described.

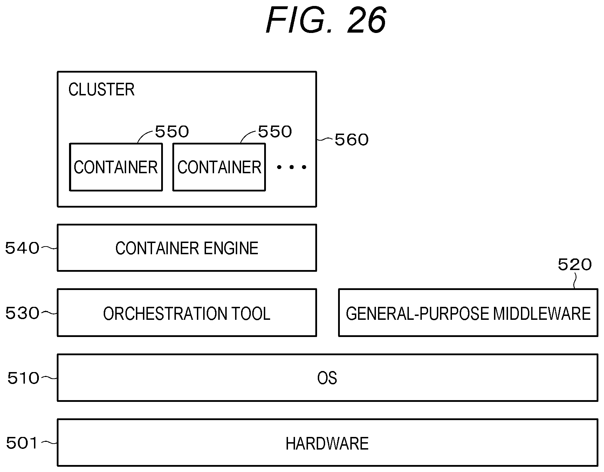

Fig. 26 illustrates an example of a software configuration of the imaging device.

As illustrated in Fig. 26, the camera 300 includes an operating system 510 installed on various types of hardware 501 such as a CPU, a graphics processing unit (GPU), a ROM, and a RAM, as the controller 330 illustrated in Fig. 24.

The operating system 510 is basic software for controlling the whole of the camera 300 to implement various functions in the camera 300.

On the operating system 510, a general-purpose middleware 520 is installed.

The general-purpose middleware 520 is software for implementing basic operations such as a communication function using the communication unit 350 as the hardware 501 and a display function using a display unit (such as a monitor) as the hardware 501, for example.

On the operating system 510, not only the general-purpose middleware 520 but also an orchestration tool 530 and a container engine 540 are installed.

The orchestration tool 530 and the container engine 540 constitute a cluster 560 as an operation environment of a container 550 to deploy and execute the container 550.

Then, the edge runtime illustrated in Fig. 22 corresponds to the orchestration tool 530 and the container engine 540 illustrated in Fig. 26.

The orchestration tool 530 has a function for causing the container engine 540 to appropriately allocate resources of the hardware 501 and the operating system 510 described above. The orchestration tool 530 collects each container 550 in a predetermined unit (a pod to be described later), and each pod is deployed to a worker node (to be described later) that is a logically different area.

The container engine 540 is one of middleware installed in the operating system 510, and operates the container 550. Specifically, the container engine 540 has a function of allocating resources (memory, calculation capacity, etc.) of the hardware 501 and the operating system 510 to the container 550 on the basis of a setting file or the like provided in the middleware in the container 550.

Then, the resources allocated in Example include not only resources such as the controller 330 provided in the camera 300 but also resources such as the in-sensor controller 430, the memory unit 450, and the communication I/F 460 provided in the image sensor IS.

The container 550 includes an application for implementing a predetermined function and middleware such as a library.

The container 550 operates to implement a predetermined function using the resources of the hardware 501 and the operating system 510 allocated by the container engine 540.

The AI application and the AI model illustrated in Fig. 22 in Example correspond to one of the containers 550. That is, one of the various containers 550 deployed in the camera 300 implements a predetermined AI image processing function using the AI application and the AI model.

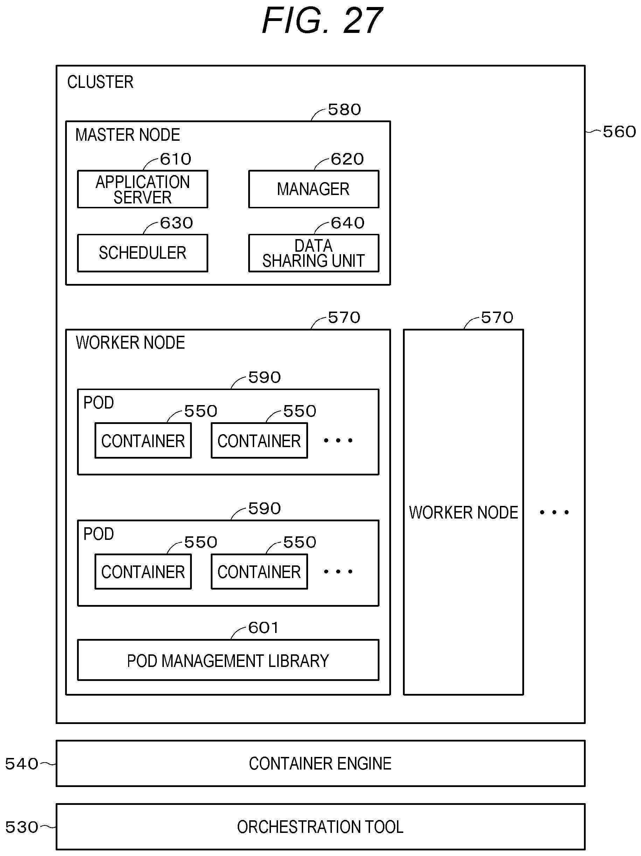

Fig. 27 illustrates an example of a specific configuration of the cluster 560 constructed by the container engine 540 and the orchestration tool 530. Alternatively, the cluster 560 may be constructed over a plurality of devices to implement functions using not only the hardware 501 provided in one camera 300 but also resources of other pieces of hardware provided in other devices.

The orchestration tool 530 manages an execution environment of the container 550 for each worker node 570. The orchestration tool 530 also constructs a master node 580 that manages the whole of the worker node 570.

In the worker node 570, a plurality of pods 590 is deployed. Each pod 590 includes one or more containers 550, and implements a predetermined function. The pod 590 is a management unit for managing the container 550 using the orchestration tool 530.

Operation of the pod 590 in the worker node 570 is controlled by a pod management library 601.

The pod management library 601 includes a network proxy and the like. Examples of the network proxy include a container runtime for causing the pod 590 to use a logically allocated resource of the hardware 501, an agent that receives control from the master node 580, and a network proxy that performs communication between the pods 590, and communication with the master node 580.

That is, the plurality of pods 590 can implement a predetermined function using each resource by using the pod management library 601.

The master node 580 includes an application server 610, a manager 620, a scheduler 630, and a data sharing unit 640.

The application server 610 deploys the pod 590. The manager 620 manages a deployment state of the container 550 deployed by the application server 610. The scheduler 630 determines the worker node 570 in which the container 550 is disposed. Then, the data sharing unit 640 performs data sharing.

Using the configurations illustrated in Figs. 26 and 27 enables deploying the AI application and the AI model described above in the image sensor IS of the camera 300 using the container technology.

As described above, the AI model may be stored in the memory unit 450 in the image sensor IS through the communication I/F 460 illustrated in Fig. 24, and the AI image processing may be performed in the image sensor IS.

Then, the AI application and the AI model may be executed by deploying the configurations illustrated in Figs. 26 and 27 in the memory unit 450 and the in-sensor controller 430 in the image sensor IS and using the container technology in the image sensor IS.

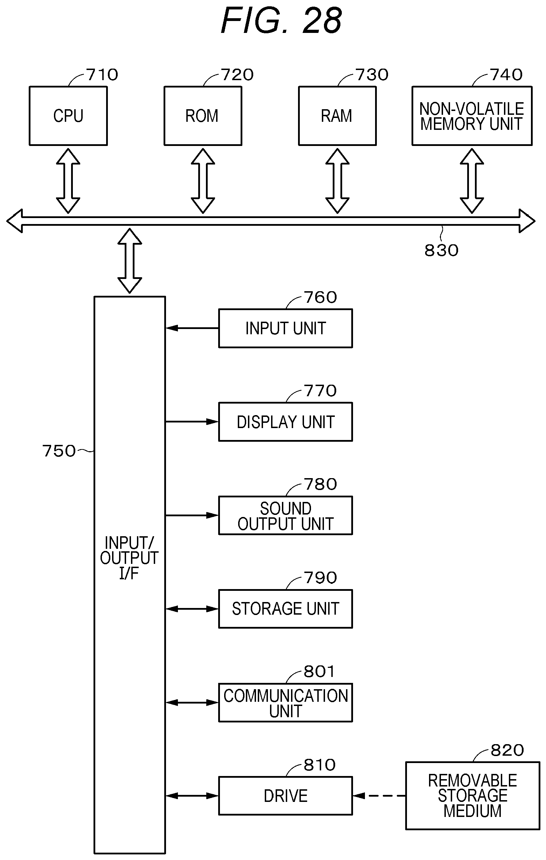

As will be described later, the AI application and the AI model, or any one of them, may use a container technology for deployment in the fog server 400 or the cloud-side information processing devices. In this case, information on each of the AI application and the AI model is deployed and executed as a container or the like in a memory such as a nonvolatile memory unit 740, a storage unit 790, or a RAM 730 illustrated in Fig. 28 to be described later.

### (5) Hardware configuration of information processing device

Fig. 28 illustrates an example of a hardware configuration of the information processing devices such as the cloud server 100, the user terminal 200, the fog server 400, and the management server 500 provided in the information processing system 1000.

The information processing devices include a CPU 710. The CPU 710 functions as an arithmetic processor that performs the various types of processing described above. The CPU 710 executes the various types of processing according to a program stored in a ROM 720 or the nonvolatile memory unit 740 or a program loaded from the storage unit 790 to the RAM 730. For example, an electrically erasable programmable read only memory (EEPROM) or the like is used for the nonvolatile memory unit 740.

Then, the RAM 730 appropriately stores data and the like necessary for the CPU 710 to execute the various types of processing.

The CPU 710 provided in the information processing device as the cloud server 100 then functions as a license authorization unit, an account service providing unit, a device monitoring unit, a marketplace function providing unit, a camera service providing unit, and the like to implement the respective functions described above.

The CPU 710, the ROM 720, the RAM 730, and the nonvolatile memory unit 740 are connected to one another through a bus 830. The bus 830 is also connected to an input/output interface (I/F) 750.

The input/output interface 750 is connected to an input unit 760 including an operator and an operation device. Examples of the input unit 760 include various operators and operation devices such as a keyboard, a mouse, a key, a dial, a touch panel, a touch pad, and a remote controller.

The input unit 760 detects an operation of the user, and the CPU 710 interprets a signal corresponding to the operation having been input.

The input/output interface 750 is also connected integrally or separately to a display unit 770 including an LCD, an organic EL panel, or the like, and an audio output unit 780 including a speaker or the like.

The display unit 770 performs various displays. The display unit 770 includes a display device provided in a housing of a computer device, and a separate display device connected to the computer device, for example.

The display unit 770 displays an image for various types of image processing, a moving image to be processed, and the like on a display screen on the basis of an instruction from the CPU 710. The display unit 770 also displays various operation menus, icons, messages, and the like on the basis of an instruction from the CPU 710. For these displays, a graphical user interface (GUI) is used.

The input/output interface 750 is connected to a storage unit 790 including a hard disk, a solid state memory, or the like, and a communication unit 801 including a modem or the like, in some cases.

The communication unit 801 performs communication processing through a transmission path such as the Internet, wired/wireless communication with various devices, and communication by bus communication or the like.

The input/output interface 750 is connected to a drive 810 as necessary. The drive 810 is used to appropriately attach a removable storage medium 820 to the input/output interface 750. Examples of the removable storage medium 820 include a magnetic disk, an optical disk, a magneto-optical disk, and a semiconductor memory.

The drive 810 is capable of reading out a data file such as a program used for each processing, and the like from the removable storage medium 820. The data file having been read out is stored in the storage unit 790. Then, the display unit 770 outputs an image included in the data file, and the audio output unit 780 outputs a sound included in the data file. Additionally, a computer program and the like read out from the removable storage medium 820 are installed in the storage unit 790 as necessary.

This computer device enables software for the processing of Example to be installed using network communication using the communication unit 801 or the removable storage medium 820, for example. Alternatively, the software may be stored in the ROM 720, the storage unit 790, or the like in advance.

Additionally, a captured image captured by the camera 300 and a processing result by the AI image processing may be received, and the captured image and the processing result may be stored in the storage unit 790 or the removable storage medium 820.

The CPU 710 performs processing operations on the basis of various programs to perform information processing and communication processing necessary for the cloud server 100 that is an information processing device including the arithmetic processor described above.

Then, besides the configuration with a single computer device illustrated in Fig. 23, the cloud server 100 may include a plurality of systematized computer devices. The plurality of computer devices is systematized by a local area network (LAN), for example. Alternatively, a plurality of computer devices disposed at remote locations may be systematized by a virtual private network (VPN) or the like using the Internet or the like. The plurality of computer devices may include a computer device as a server group (cloud) usable by a cloud computing service.

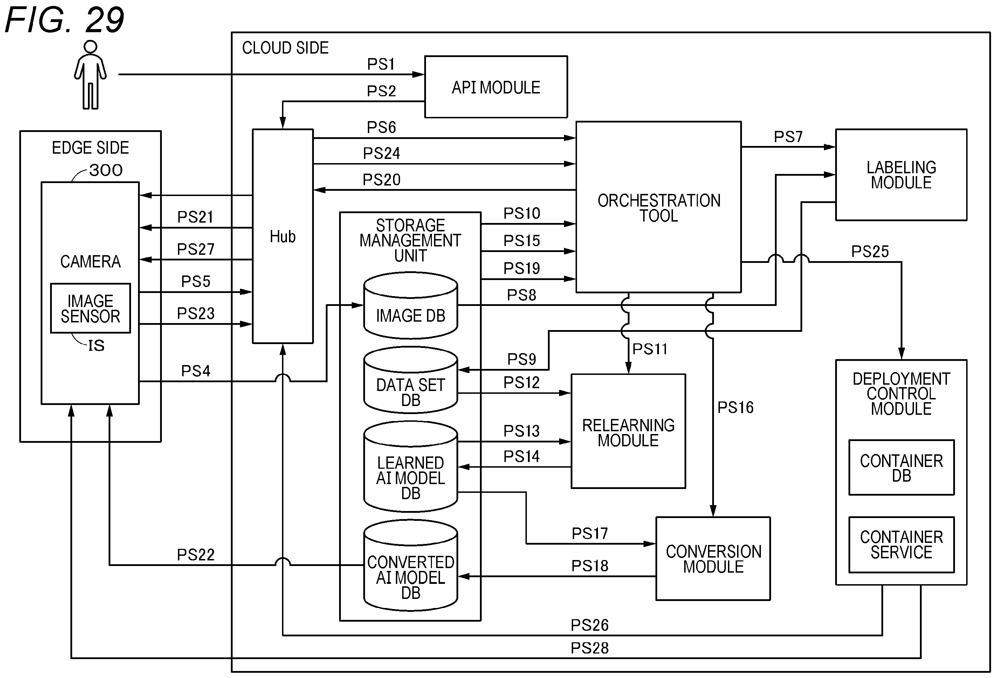

With reference to Fig. 29, an imaging device and an imaging device system to which the present technology can be applied will be further described. Fig. 29 illustrates an example of a schematic configuration for describing a flow of processing when an AI model or an AI application is updated in the imaging device and the imaging device system.

After the SW component of the AI application and the AI model described in Example are deployed, the AI model is relearned and the AI model (referred to below as an "edge-side AI model") and the AI application deployed to the plurality of cameras 300 and the like are updated by an operation of a service provider or a user as a trigger.

Fig. 29 illustrates one camera 300 having been focused among the plurality of cameras 300. Then, the edge-side AI model to be updated is deployed in the image sensor IS provided in the camera 300, for example, in the following description. Alternatively, the edge-side AI model may be deployed outside the image sensor IS in the camera 300.

First, a service provider or a user instructs the AI model to be relearned in processing step PS1. This instruction is performed using an application programming interface (API) function of an API module provided in the cloud-side information processing devices. Then, the instruction designates the amount of image (e.g., the number of images) used for learning. Hereinafter, the amount of image used for learning may be referred to as a "predetermined number of images".

Upon receiving the instruction, the API module transmits a relearning request and information on the amount of image to the Hub (see Fig. 22.) in processing step PS2.

The Hub transmits an update notification and the information on the amount of image to the camera 300 as the edge-side information processing device in processing step PS3.

The camera 300 transmits captured image data obtained by performing imaging to an image database (DB) of a storage group in processing step PS4. This imaging processing and transmission processing are performed until a predetermined number of images necessary for relearning is achieved.

Then, upon obtaining an inference result by performing inference processing on the captured image data, the camera 300 may store the inference result in the image DB as metadata on the captured image data in processing step PS4.

The inference result in the camera 300 stored in the image DB as metadata enables careful selection of data necessary for relearning of the AI model to be performed on the cloud side. Specifically, the relearning can be performed using only image data in which the inference result in the camera 300 is different from a result of inference performed using abundant computer resources in the cloud-side information processing devices. Thus, time required for the relearning can be shortened.

After finishing imaging and transmission of the predetermined number of images, the camera 300 notifies the Hub of completion of transmission of the predetermined number of pieces of image data in processing step PS5.

Upon receiving the notification, the Hub notifies the orchestration tool of completion of preparation of the data for relearning in processing step PS6.

The orchestration tool transmits an instruction to perform labeling processing to a labeling module in processing step PS7.

The labeling module acquires image data to be subjected to the labeling processing from the image DB (processing step PS8), and performs the labeling processing.

Here, the labeling processing performs the class identification described above. The labeling processing also estimates sex and age of a subject of an image and gives a label. Then, the labeling processing estimates a pose of the subject and gives a label. The labeling processing further estimates behavior of the subject and gives a label.

The labeling processing may be performed manually or automatically. The labeling processing may be also completed in the cloud-side information processing devices, or may be also implemented by using a service provided by another server device.

The labeling module having completed the labeling processing stores result information on labeling in a data set DB in processing step PS9. Here, the information stored in the data set DB may be a set of label information and image data, or may be image identification (ID) information for identifying image data instead of the image data itself.

A storage management unit having detected that the labeling result information has been stored notifies the orchestration tool in processing step PS10.

The orchestration tool having received the notification checks that the labeling processing for image data with the predetermined number of pieces of image data has finished, and transmits a relearning instruction to a relearning module in processing step PS11.

The relearning module having received the relearning instruction acquires not only a data set used for learning from the data set DB in processing step PS12, but also an AI model to be updated from a learned AI model DB in processing step PS13.

The relearning module uses the acquired data set and AI model to perform relearning of the AI model. The updated AI model obtained in this manner is stored again in the learned AI model DB in processing step PS14.

The storage management unit having detected that the updated AI model has been stored notifies the orchestration tool in processing step PS15.

The orchestration tool having received the notification transmits a conversion instruction of the AI model to a conversion module in processing step SP16.

The conversion module having received the conversion instruction acquires the updated AI model from the learned AI model DB in processing step PS17, and performs conversion processing of the AI model.

The conversion processing is performed in which processing of conversion in accordance with specification information or the like of the camera 300 that is the device of the deployment destination is performed. This processing is performed in which downsizing is performed while preventing degradation in performance of the AI model as much as possible, and file format conversion or the like is performed to enable the AI model to be operated on the camera 300.

The AI model converted by the conversion module serves as the edge-side AI model described above. This converted AI model is stored in a converted AI model DB in processing step PS18.

The storage management unit having detected that the converted AI model has been stored notifies the orchestration tool in processing step PS19.

The orchestration tool having received the notification transmits a notification for updating the AI model to the Hub in processing step PS20. This notification includes information for identifying a place where the AI model to be used for the update is stored.

The Hub having received the notification transmits an instruction to update the AI model to the camera 300. The instruction to update the AI model also includes the information for identifying the place where the AI model is stored.

The camera 300 performs processing of acquiring a target converted AI model from the converted AI model DB and deploying the converted AI model in processing step PS22. Consequently, the AI model used in the image sensor IS of the camera 300 is updated.

The camera 300 having completed the update of the AI model by deploying the AI model transmits an update completion notification to the Hub in the processing step PS23.

The Hub having received the notification notifies the orchestration tool of completion of the AI model update processing of the camera 300 in processing step PS24.

Then, an example is here described in which the AI model is deployed and used in the image sensor IS (e.g., the memory unit 450 illustrated in Fig. 24) of the camera 300. The present technology allows the AI model to be deployed and used outside the image sensor IS (e.g., the memory unit 340 illustrated in Fig. 24) in the camera 300 or in a storage unit (not illustrated) in the fog server 400. The AI model can be similarly updated.

When the AI model is deployed in this case, the storage management unit or the like on the cloud side records a device (place) in which the AI model is deployed. The Hub reads out the device (place) in which the AI model is deployed from the storage management unit, and transmits an update instruction of the AI model to the device in which the AI model is deployed.

The device having received the update instruction performs processing of acquiring the target converted AI model from the converted AI model DB and deploying the converted AI model in processing step PS22. Consequently, the AI model of the device having received the update instruction is updated.

Then, the processing is completed up to this point to only update the AI model.

To update not only the AI model but also the AI application using the AI model, processing to be described later is further performed.

Specifically, the orchestration tool transmits a download instruction of the AI application such as an updated firmware to a deployment control module in processing step PS25.

The deployment control module transmits a deployment instruction of the AI application to the Hub in processing step PS26. This instruction includes information for identifying a place where the updated AI application is recorded.

The Hub transmits the deployment instruction to the camera 300 in processing step PS27.

The camera 300 downloads the updated AI application from a container DB of the deployment control module and deploys the updated AI application in processing step PS28.

Then, the above description has illustrated an example in which the AI model to be operated on the image sensor IS of the camera 300 and the AI application to be operated outside the image sensor IS in the camera 300 are sequentially updated.

The AI application has been briefly described in the above description. As described above, the AI application is defined by a plurality of SW components such as SW components B1, B2, B3,..., and Bn. When the AI application is deployed, the storage management unit or the like on the cloud-side records where the plurality of SW components is deployed. The Hub reads out a device (place) in which each SW component is deployed from the storage management unit and transmits a deployment instruction to the deployed device when processing in processing step PS27 is performed. The device having received the deployment instruction downloads a SW component having been updated from the container DB of the deployment control module and deploys the SW component in processing step PS28.

Then, the AI application is here a SW component other than the AI model.

Additionally, the AI model and the AI application, both of which operate in one device, may be collectively updated as one container. In this case, the AI model and the AI application may be simultaneously updated instead of being sequentially updated. Then, the update can be implemented by performing each processing in processing step PS25, processing step PS26, processing step PS27, and processing step PS28.

For the image sensor IS of the camera 300, to which both the containers of the AI model and the AI application can be deployed, for example, the AI model and the AI application can be updated by performing processing in each of processing step PS25, processing step PS26, processing step PS27, and processing step PS28 as described above.

Performing the above-described processing causes relearning of the AI model to be performed using the captured image data captured in the use environment of the user. Thus, the edge-side AI model can be formed, in which a highly accurate recognition result can be output in the use environment of the user.

Then, even for change in use environment of the user, such as change in layout in a store and change in an installation place of the camera 300, the relearning of the AI model can be appropriately performed each time. Consequently, recognition accuracy using the AI model can be maintained without deterioration.

Then, each processing described above may be performed not only for the relearning of the AI model but also for a first operation of a system under the use environment of the user.

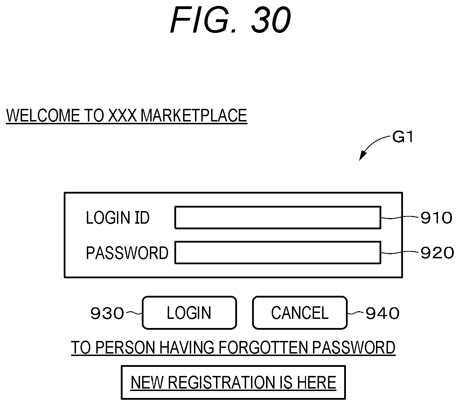

With reference to Figs. 30 to 32, an imaging device and an imaging device system to which the present technology can be further applied will be described.

Fig. 30 illustrates a display example to be presented to the user regarding the marketplace in the imaging device and the imaging device system.

A login screen G1 displays an ID input field 910 for inputting a user ID and a password input field 920 for inputting a password.

Below the password input field 920, a login button 930 for performing login and a cancel button 940 for canceling login are disposed.

Further below the buttons, an operator for transitioning to a page for a user who has forgotten a password, an operator for transitioning to a page for newly performing user registration, and the like are appropriately disposed.

Once the login button 930 is pressed after an appropriate user ID and password are input, the cloud server 100 and the user terminal 200 each perform processing of transitioning to a user-specific page.

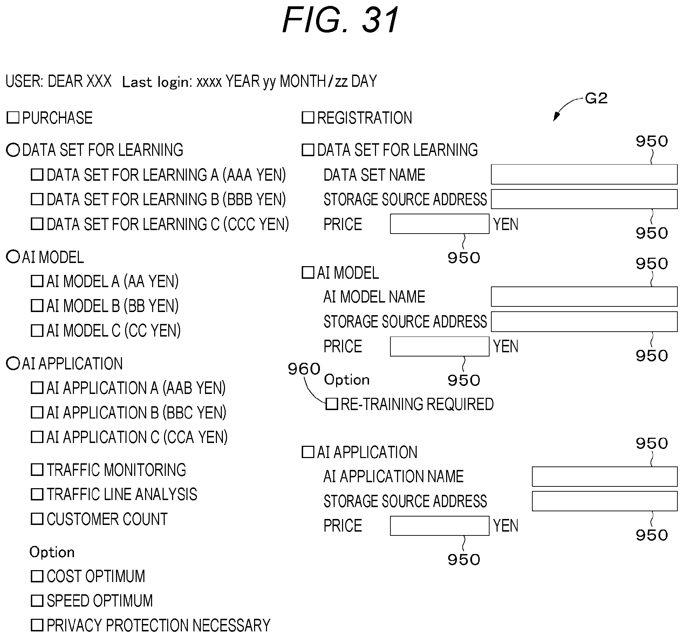

Fig. 31 illustrates a display example to be presented to an AI application developer who uses the application developer terminal 200A, and an AI model developer who uses the AI model developer terminal 200C, for example.

Each developer can purchase each of a learning data set, an AI model, and an AI application through a marketplace for development. Then, an AI application or an AI model developed by oneself can be registered in the marketplace.

Fig. 31 illustrates a developer screen G2 on which a purchasable learning data set, an AI model, an AI application, and the like (referred to below simply and collectively as "data") are displayed leftward.

Then, although not illustrated, learning can be prepared by displaying an image of a learning data set on a display, surrounding only a desired part of the image with a frame using an input device such as a mouse, and inputting only a name when the learning data set is purchased.

For example, surrounding only a cat part on an image with a frame and inputting a "cat" as a text input for AI learning desired to be performed using a cat image enable preparing an image to which a cat annotation is added for the AI learning.

Then, to easily find desired data, purposes such as "traffic monitoring", "traffic line analysis", and "customer count" are made selectable. That is, the cloud server 100 and the user terminal 200 each perform display processing in which only data suitable for the selected purpose is displayed.

The developer screen G2 also may display a purchase price of each piece of data.

The developer screen G2 is also provided with an input field 950 and the like rightward for registering a learning data set collected or created by the developer, an AI model developed by the developer, and an AI application.

The developer screen G2 is provided with an input field 950 for inputting a name and a data storage location for each data. Then, a check box 960 for setting necessity or unnecessity of retraining is provided for the AI model.

Additionally, a price setting field (illustrated as the input field 950 in Fig. 31) or the like may be provided in which a price necessary for purchasing data to be registered can be set.

The developer screen G2 also has an upper part in which a user name, a final login date, and the like are displayed as part of the user information. Besides this, the amount of currency, the number of points, and the like that can be used when the user purchases data may be displayed.

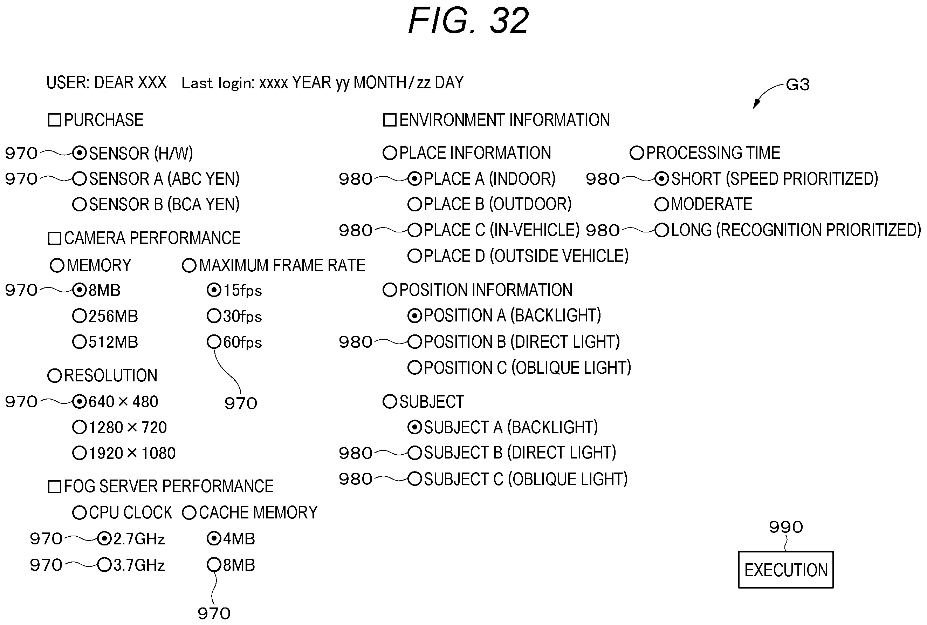

Fig. 32 illustrates a display example to be presented to the user using the application. This display example shows a screen G3 for a user that is presented to the user using the application, the user performing various analyses and the like by deploying the AI application and the AI model in the camera 300 as the edge-side information processing device managed by the user itself, for example.

The user can purchase the camera 300 to be disposed in a space to be monitored through the marketplace. Thus, the screen G3 for a user is provided on the left with radio buttons 970 capable of selecting a type and performance of the image sensor IS mounted on the camera 300, performance of the camera 300, and the like.

The user can also purchase an information processing device as the fog server 400 through the marketplace. Thus, the screen G3 for a user is provided on the left with the radio buttons 970 for selecting respective performances of the fog server 400.

Then, the user having already had the fog server 400 can register the performance of the fog server 400 by inputting performance information on the fog server 400 here.

The user can implement a desired function by installing the purchased camera 300 in an appropriate place such as a store managed by the user. The marketplace enables registration of information on an installation place of the camera 300, thereby exerting functions of the plurality of cameras 300 at a maximum. Then, the camera 300 may be purchased without using the marketplace.

The screen G3 for a user is provided on the right with radio buttons 980 capable of selecting environment information on environment in which the camera 300 is installed. The user can set the above-described optimum imaging setting to the target camera 300 by appropriately selecting the environment information on the environment in which the camera 300 is installed.

Then, for purchase of the camera 300 for which an installation place has been determined, selecting each item on the left and each item on the right of the screen G3 for a user enables purchasing the camera 300 for which the optimum imaging setting is made in advance according to the installation place determined.

The screen G3 for a user is provided with an execution button 990. Pressing the execution button 990 enables transition to a check screen for checking the purchase or a check screen for checking the setting of the environmental information. Consequently, the user can purchase a desired camera 300 or fog server 400, and can set the environmental information on the camera 300.

The marketplace enables changing the environmental information on the plurality of cameras 300 for change of the installation place of the camera 300. When the environmental information on the installation place of the camera 300 is input again on the change screen (not illustrated), the optimum imaging setting for the camera 300 can be reset.

The present technology is not limited to Example described above, and various modifications can be made without departing from the gist of the present technology.

For example, solid-state imaging devices according to two or more Examples may be combined.

### [Application example of information processing device]

Next, an application example of the cloud-side information processing devices will be described. The cloud-side information processing devices according to Example enable implementing functions of the information processing devices described in each embodiment.

### (First application example)

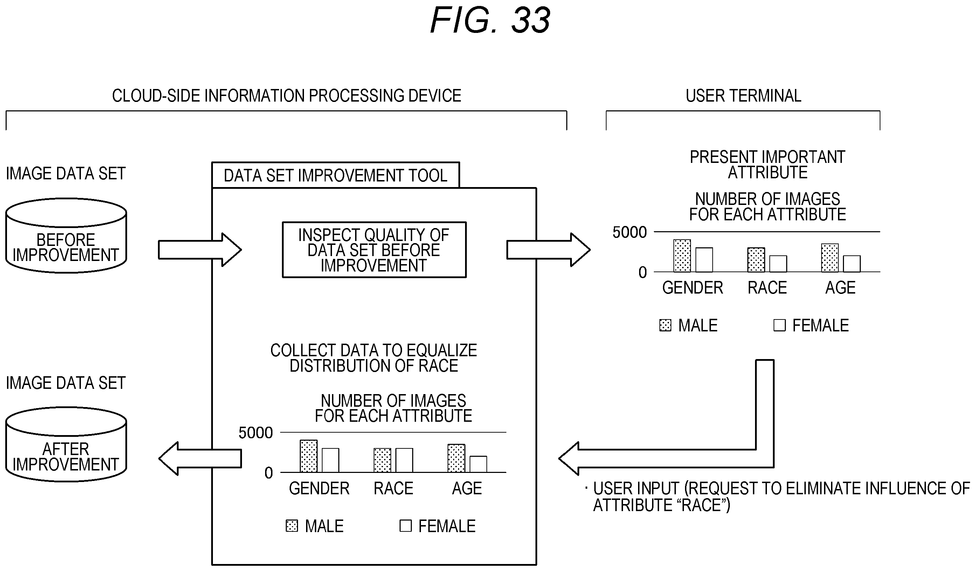

Fig. 33 is a diagram for illustrating a first application example of the cloud-side information processing devices. The present example shows the user terminal 200 (e.g., the AI model developer terminal 200C) that downloads an image data set for learning from the cloud-side information processing devices. The cloud-side information processing devices in the present example function as a data set improvement tool for improving bias included in a data set.

The cloud-side information processing devices read out a data set (referred to below appropriately as a data set before improvement) before bias improvement of an attribute from a storage unit (e.g., the storage unit 790). The data set to be read out may be designated by the user terminal 200 or may be automatically selected by the cloud-side information processing devices according to task contents of the AI model to be developed.

The cloud-side information processing devices perform types of processing using the attribute extractor 2, the labeling unit 3, and the bias detector 4 on the data set before improvement. The processing described in each embodiment can be applied as contents of the types of processing.

Display information indicating a labeling result acquired by the labeling unit 3 is transmitted to the user terminal 200. Then, the number of pieces of image data for each attribute is displayed on the display unit or the like of the user terminal 200 as an example of the display information. The user of the user terminal 200 inputs a request of the user to eliminate influence of the attribute "race", that is, to improve bias of the attribute "race", for example. The input described above is transmitted from the user terminal 200 to the cloud-side information processing device.

The cloud-side information processing devices adjust the contents of the data set before improvement on the basis of the information transmitted from the user terminal 200. For example, the data set adjuster 5 adjusts the number of pieces of image data to be equal between male and female in the number of pieces of image data on the attribute "race" designated by the user terminal 200. Consequently, the cloud-side information processing devices generate a data set after improvement in which at least one attribute existing in the data set before improvement is improved. The data set after the improvement is transmitted by the user terminal 200.

Alternatively, the user terminal 200 may display a result of the bias detector 4. The user terminal 200 may display the number of images of the data set after improvement. The improvement in bias of the data set may be performed for a fee. Then, when an attribute to be improved in bias is not designated by the user terminal 200, every bias may be improved.

Applying the information processing devices as the data set improvement tool as described above enables detecting a bias overlooked by a person. Then, the user terminal 200 can also designate an attribute for which bias is requested to be eliminated. Combinations of attributes with bias and combinations of attributes with improved bias can also be considered.

### (Second application example)

Next, a second application example will be described. The present example also uses the cloud-side information processing devices as the data set improvement tool.

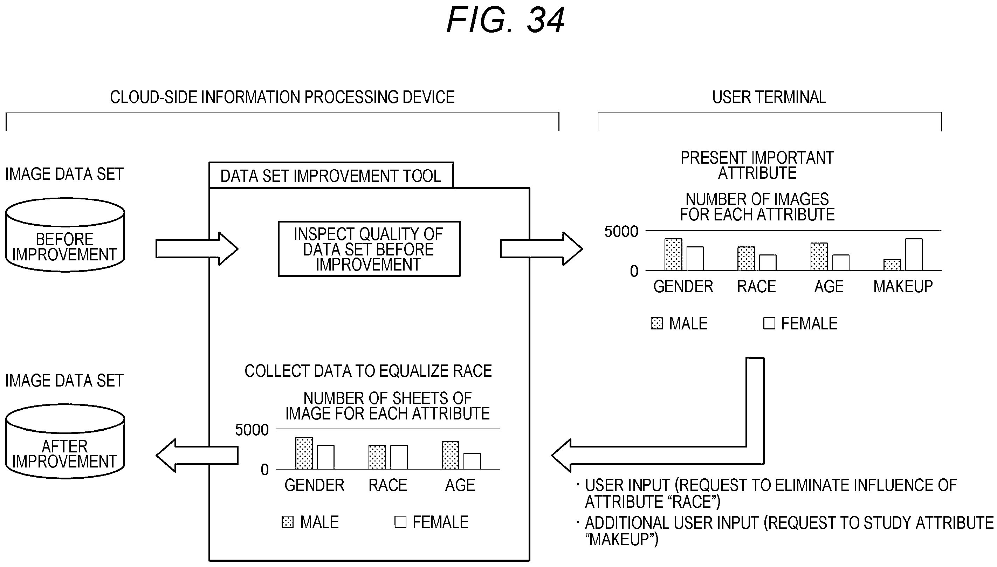

Fig. 34 is a diagram for illustrating the second application example of the cloud-side information processing devices. In the present example, the processing described in the first application example is first performed. That is, when the user designates the attribute "race" for the data set before improvement, bias existing in the attribute "race" is improved, and the data set after improvement is generated.

The user also can inspect whether or not an attribute being not presented has bias. For example, a user desiring to inspect whether or not an attribute "makeup" has bias designates the attribute "makeup" and transmits the attribute "makeup" from the user terminal 200 to the cloud-side information processing devices.

The cloud-side information processing devices cause the attribute extractor 2 to extract whether or not the attribute "makeup" is included in image data constituting the data set (in this case, the data set improved in bias for the attribute "race"). Then, the user terminal 200 displays a labeling result acquired by the labeling unit 3 and a detection result acquired by the bias detector 4 for the attribute "makeup" as illustrated in Fig. 34. For the attribute "makeup" having bias, improving the bias may be requested from the user terminal 200 to the cloud-side information processing devices.

The present example enables the user not only to define an arbitrary attribute even for an attribute that has not been found by the data set improvement tool, but also to further inspect whether or not the attribute has bias. The user can further designate another attribute on the basis of a result of the inspection. In this manner, contents of the data set can be checked and improved until the user satisfies the contents whether the attribute has bias.

### (Third application example)

Next, a third application example will be described. The present example uses the cloud-side information processing devices as a data set assessment tool.

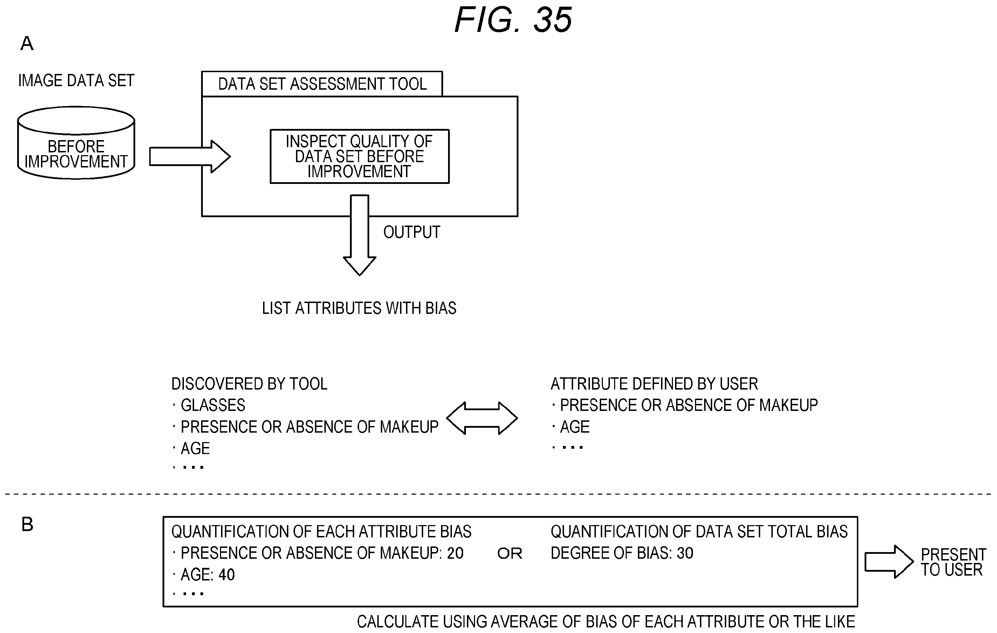

Figs. 35A and 35B are each a diagram for illustrating the third application example of the cloud-side information processing devices. As illustrated in Fig. 35A, the cloud-side information processing devices perform types of processing using the attribute extractor 2, the labeling unit 3, and the bias detector 4 on a data set before improvement in bias. Then, an attribute in which the bias is detected by the bias detector 4 is transmitted to the user terminal 200.

The user terminal 200 lists and displays attributes (attributes "glasses", "presence or absence of makeup", "age", and the like in the illustrated example) detected by the cloud-side information processing devices. Then, the listed attributes can be compared with attributes defined as having bias by the user itself. That is, the present example enables comparing an attribute defined in advance by the user using its technical knowledge (an attribute considered to have a bias) with an attribute having a bias detected by the cloud-side information processing devices. As a result of the comparison, a degree of matching between both of the attributes can be obtained.

Alternatively, an imbalance degree calculated when the bias detector 4 detects the bias may be displayed as illustrated in Fig. 35B. In this case, the imbalance degree of each attribute may be displayed, an average of the imbalance degrees of respective attributes may be displayed, or both of them may be displayed.

### (Fourth application example)

Next, a fourth application example will be described. As described above, the data set for learning can be downloaded from the cloud-side information processing devices. The present example enables the user to recognize contents regarding bias of a data set using the user terminal 200.

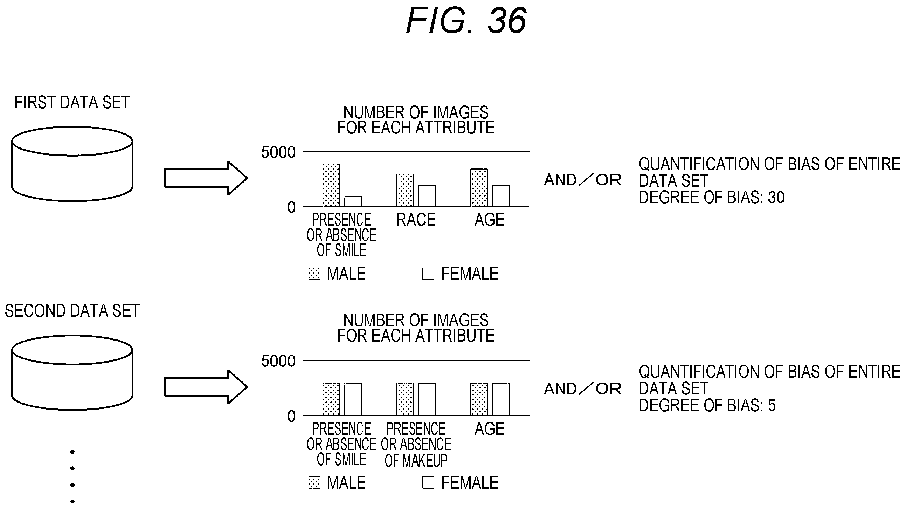

For example, when the user terminal 200 accesses the cloud-side information processing devices, the screen illustrated in Fig. 36 is displayed on the display unit or the like of the user terminal 200. Information indicating a first data set and information indicating a second data set are indicated as an example of a plurality of data sets, for example. As a matter of course, the number of data sets may be other than two. The information indicating the first data set include information such as text information for identifying the first data set, a labeling result acquired by the labeling unit 3 for the first data set, and/or a bias detection result (e.g., a numerical value indicating the degree of imbalance) for each attribute acquired by the bias detector 4. The information indicating the second data set include information such as text information for identifying the second data set, a labeling result acquired by the labeling unit 3 for the second data set, and/or a bias detection result (e.g., a numerical value indicating the degree of imbalance) for each attribute acquired by the bias detector 4.

As described above, some attributes may preferably have a bias depending on task contents of the AI model. Displaying the labeling result acquired by the labeling unit 3 and/or the detection result of the bias for each attribute acquired by the bias detector 4 together with the information for identifying the data enables the user to select and download a data set suitable for the AI model to be developed. Then, the contents illustrated in Fig. 36 may be displayed on the display unit 6A or the like instead of the user terminal 200.

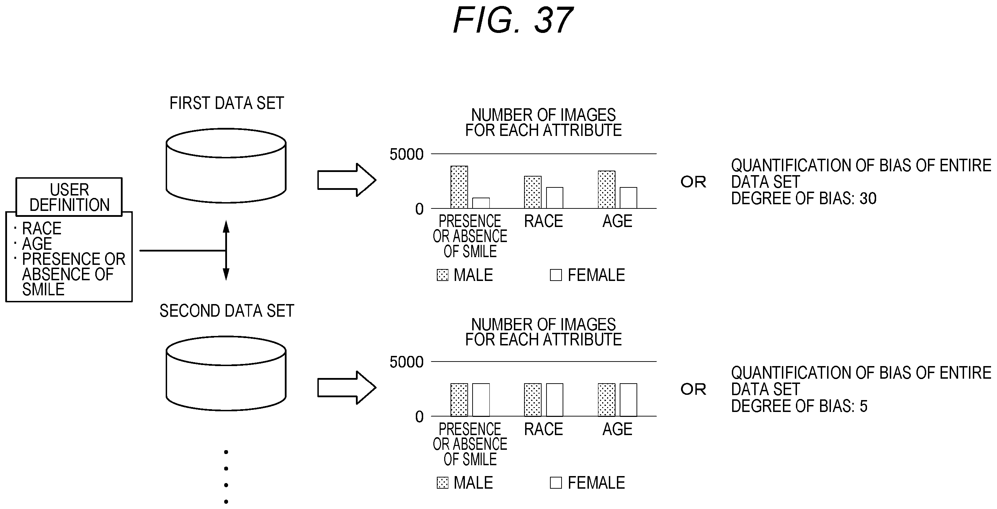

Alternatively, only information associated with an attribute defined by the user may be displayed for each data set as illustrated in Fig. 37. Consequently, presence or absence of bias for the attribute required by the user can be easily compared between the data sets.

The cloud-side information processing devices may be configured to enable searching a data set using an attribute and presence or absence of bias of the attribute as a key. For example, the cloud-side information processing devices may be configured to search for a data set suitable for a request of the user, the request having been made for a data set in which only the attribute "presence or absence of smile" has bias. Then, when no data set suitable for the request has been found, the cloud-side information processing devices may generate a data set suitable for the request using the data set adjuster 5 that performs processing to cause only the attribute "presence or absence of a smile" to have bias

### (Fifth application example)

Next, a fifth application example will be described. The present example shows the cloud-side information processing devices that guarantee quality of the data set used for learning of the AI model.

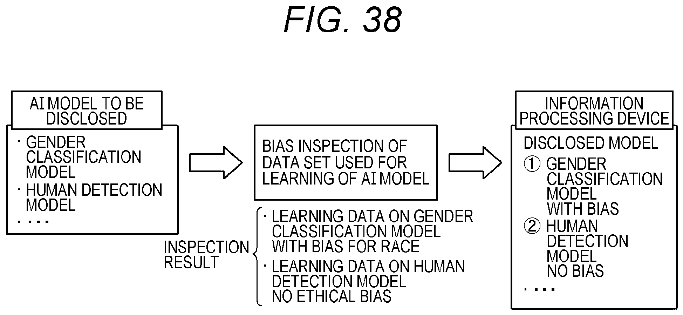

For example, a gender classification model and a human detection model are considered as an example of the AI model to be published by the cloud-side information processing devices as illustrated in Fig. 38. The cloud-side information processing devices inspect a data set used for learning of each AI model. Specifically, the cloud-side information processing devices inspect whether or not at least an ethical attribute has bias in the data set used for learning of each AI model. The inspection of whether the ethical attribute has bias is performed by applying the method described in the embodiment.

When the AI model is disclosed in the cloud-side information processing devices, inspection result information corresponding to an inspection result is presented together. For example, the bias detector 4 or the like detects that the attribute "race", which is an example of an ethical attribute, has bias in a data set used for learning of the gender classification model. This configuration clarifies bias existing in the ethical attribute when the gender classification model is disclosed by the cloud-side information processing devices. That is, contents of the data set used for learning of the gender classification model are clarified to be inappropriate. Then, for the bias existing in the ethical attribute, an AI model having learned using the data set including the bias may not be disclosed by the cloud-side information processing devices.

Additionally, no bias is detected for the ethical attribute in the data set used for learning of the human detection model, for example. This detection clarifies no bias existing for the ethical attribute when the human detection model is disclosed by the cloud-side information processing devices. That is, contents of the data set used for learning of the human classification model are clarified to be appropriate. No bias existing for the ethical attribute may be displayed with letters "no bias" as illustrated in Fig. 38, or may be displayed by a mark or the like that guarantees quality of the data set used for learning of the AI model.

The present example associates the inspection result information corresponding to the inspection result of the data set with the AI model to enable guaranteeing quality of the data set used for learning of the AI model when the AI model is disclosed. Then, an AI model obtained by learning a data set with an ethical attribute having bias can be prevented from being disclosed. Alternatively, the inspection result information may be associated with the data set. Consequently, the data set can be handled as with the AI model. For example, the data set with the ethical attribute having the bias can be prevented from being disclosed when the data set is disclosed in the cloud-side information processing devices. The inspection result information may be associated with both the AI model and the data set used for learning of the AI model.

### <Modification>

Although the plurality of embodiments and examples of the present technology have been specifically described above, the contents of the present technology are not limited to the above-described embodiments and the like, and various modifications based on the technical idea of the present technology can be made. Hereinafter, modifications will be described.

The data set for learning may have contents (voice data or the like) other than image data. This data set is considered to have a model of automatically estimating an emotion and an environmental sound (surrounding sound) from voice data, for example, and the emotion and the environmental sound can be considered as an example of an attribute. Alternatively, a data set in which "male" and "female" are not annotated in advance is also available.

For example, configurations, methods, processes, shapes, materials, numerical values and the like of the above-described embodiments can be combined or exchanged with each other without departing from the gist of the present technology. Then, one can be divided into two or more, and a part thereof can be eliminated. The matters described in the embodiments and modifications can be also combined with each other. Then, each processing described above may be performed in a distributed manner by a plurality of information processing devices.

Note that the effects described herein are merely examples and are not limited, and other effects may be provided.

Then, the present technology can also use configurations below.
(1) An information processing device including:
   an attribute extractor that extracts an attribute from a data set having been input;
   a labeling unit that labels an attribute for each data constituting the data set;
   a bias detector that detects a bias for each attribute on the basis of a result of the labeling; and
   a data set adjuster that adjusts the data set to improve at least one bias detected by the bias detector.
(2) The information processing device described in Item (1), in which
   the data set adjuster improves the bias by expanding the data set.
(3) The information processing device described in Item (2), in which
   the data set adjuster expands the data set by adding new data to the data set.
(4) The information processing device described in Item (2), in which
   the data set adjuster expands the data set by adding generated new data to the data set.
(5) The information processing device described in Item (4), in which
   the generated new data includes data based on a virtual viewpoint generated on the basis of actual data.
(6) The information processing device described in Item (1), in which
   the data set adjuster improves the bias by deleting a part of data constituting the data set.
(7) The information processing device described in any one of Items (1) to (6), further including
   an output unit.
(8) The information processing device described in Item (7), in which
   the output unit outputs display information obtained by visualizing a result of labeling performed by the labeling unit.
(9) The information processing device described in Item (8), in which
   the display information includes display information indicating a result of the labeling in a graph format and data on a representative sample corresponding to at least one attribute.
(10) The information processing device described in any one of Items (7) to (9), in which
   the output unit outputs display information obtained by visualizing information based on the bias for each attribute detected by the bias detector.
(11) The information processing device described in Item (10), in which
   the information based on the bias for each attribute includes at least one of a bias degree of each attribute and a bias degree of the entire data set.
(12) The information processing device described in any one of Items (7) to (11), in which
   the output unit outputs display information obtained by visualizing a result of the bias improved by the data set adjuster.
(13) The information processing device described in any one of Items (7) to (12), in which
   the output unit outputs a data set in which the at least one bias is improved.
(14) The information processing device described in any one of Items (1) to (13), further including
   a learning unit that performs machine learning on the basis of a data set in which the at least one bias is improved.
(15) The information processing device described in any one of Items (1) to (14), in which
   attributes labeled by the labeling unit include an attribute designated by a user,
   the bias detector detects a bias for at least the attribute designated by the user on the basis of a result of the labeling, and
   the data set adjuster adjusts the data set to improve the bias of the attribute designated by the user, the bias being detected by the bias detector.
(16) The information processing device described in any one of Items (1) to (15), in which
   the attribute extractor extracts an attribute, the labeling unit labels the attribute, the bias detector detects a bias of each attribute, and the data set adjuster adjusts the data set, while using an AI model having learned using the data set.
(17) The information processing device described in any one of Items (1) to (16), in which
   the data set adjuster adjusts the data set to improve bias of an ethical attribute.
(18) The information processing device described in any one of Items (1) to (17), in which
   the data set adjuster adjusts the data set to improve bias designated by the user among biases detected by the bias detector.
(19) The information processing device described in any one of Items (1) to (18), in which
   the data set is used for learning of a predetermined AI model, and
   the bias detector detects at least presence or absence of bias of an ethical attribute, and associates detection result information corresponding to a detection result with at least one of the data set and the AI model having learned using the data set.
(20) The information processing device described in Item (7), in which
   the output unit outputs display information obtained by visualizing information on the first data set and information on the second data set,
   the information of the first data set includes at least one of a labeling result of an attribute by the labeling unit for the first data set and a detection result of a bias for each attribute by the bias detector for the first data set, and
   the information on the second data set includes at least one of a labeling result of an attribute obtained by the labeling unit for the second data set and a detection result of bias for each attribute obtained by the bias detector for the second data set.
(21) An information processing method including:
   extracting an attribute from a data set having been input using an attribute extractor;
   labeling each data constituting the data set with the attribute using a labeling unit;
   detecting bias for each attribute on a basis of a result of the labeling using a bias detector; and
   adjusting the data set to improve at least one bias detected by the bias detector using a data set adjuster.
(22) A program for causing a computer to perform an information processing method including:
   extracting an attribute from a data set having been input using an attribute extractor;
   labeling each data constituting the data set with the attribute using a labeling unit;
   detecting bias for each attribute on a basis of a result of the labeling using a bias detector; and
   adjusting the data set to improve at least one bias detected by the bias detector using a data set adjuster.

### REFERENCE SIGNS LIST

- 1: Information processing device
- 2: Attribute extractor
- 3: Labeling unit
- 4: Bias detector
- 5: Data set adjuster
- 6: Output unit
- 6A: Display unit
- 100: Cloud server
- 200C: AI model developer terminal
- 500: Management server
- 1000: Information processing stem

## Claims

1. An information processing device comprising:
an attribute extractor that extracts an attribute from a data set having been input;
a labeling unit that labels an attribute for each data constituting the data set;
a bias detector that detects a bias for each attribute on a basis of a result of the labeling; and
a data set adjuster that adjusts the data set to improve at least one bias detected by the bias detector.

2. The information processing device according to claim 1, wherein
the data set adjuster improves the bias by expanding the data set.

3. The information processing device according to claim 2, wherein
the data set adjuster expands the data set by adding new data to the data set.

4. The information processing device according to claim 2, wherein
the data set adjuster expands the data set by adding generated new data to the data set.

5. The information processing device according to claim 4, wherein
the generated new data includes data based on a virtual viewpoint generated on a basis of actual data.

6. The information processing device according to claim 1, wherein
the data set adjuster improves the bias by deleting a part of data constituting the data set.

7. The information processing device according to claim 1, further comprising
an output unit.

8. The information processing device according to claim 7, wherein
the output unit outputs display information obtained by visualizing a result of labeling performed by the labeling unit.

9. The information processing device according to claim 8, wherein
the display information includes display information indicating a result of the labeling in a graph format and data on a representative sample corresponding to at least one attribute.

10. The information processing device according to claim 7, wherein
the output unit outputs display information obtained by visualizing information based on the bias for each attribute detected by the bias detector.

11. The information processing device according to claim 10, wherein
the information based on the bias for each attribute includes at least one of a bias degree of each attribute and a bias degree of the entire data set.

12. The information processing device according to claim 7, wherein
the output unit outputs display information obtained by visualizing a result of the bias improved by the data set adjuster.

13. The information processing device according to claim 7, wherein
the output unit outputs a data set in which the at least one bias is improved.

14. The information processing device described according to claim 1, further comprising
a learning unit that performs machine learning on a basis of a data set in which the at least one bias is improved.

15. The information processing device according to claim 1, wherein
attributes labeled by the labeling unit include an attribute designated by a user,
the bias detector detects a bias of at least the attribute designated by the user on a basis of a result of the labeling, and
the data set adjuster adjusts the data set to improve the bias of the attribute designated by the user, the bias being detected by the bias detector.

16. The information processing device according to claim 1, wherein
the attribute extractor extracts an attribute, the labeling unit labels the attribute, the bias detector detects a bias of each attribute, and the data set adjuster adjusts the data set, while using an AI model having learned using the data set.

17. The information processing device according to claim 1, wherein
the data set adjuster adjusts the data set to improve bias of an ethical attribute.

18. The information processing device according to claim 1, wherein
the data set adjuster adjusts the data set to improve bias designated by the user among biases detected by the bias detector.

19. The information processing device according to claim 1, wherein
the data set is used for learning of a predetermined AI model, and
the bias detector detects at least presence or absence of bias of an ethical attribute, and associates detection result information corresponding to a detection result with at least one of the data set and the AI model having learned using the data set.

20. The information processing device according to claim 7, wherein
the output unit outputs display information obtained by visualizing information on the first data set and information on the second data set,
the information of the first data set includes at least one of a labeling result of an attribute by the labeling unit for the first data set and a detection result of a bias for each attribute by the bias detector for the first data set, and
the information on the second data set includes at least one of a labeling result of an attribute obtained by the labeling unit for the second data set and a detection result of bias for each attribute obtained by the bias detector for the second data set.

21. An information processing method comprising:
extracting an attribute from a data set having been input using an attribute extractor;
labeling each data constituting the data set with the attribute using a labeling unit;
detecting bias for each attribute on a basis of a result of the labeling using a bias detector; and
adjusting the data set to improve at least one bias detected by the bias detector using a data set adjuster.

22. A program for causing a computer to perform an information processing method including:
extracting an attribute from a data set having been input using an attribute extractor;
labeling each data constituting the data set with the attribute using a labeling unit;
detecting bias for each attribute on a basis of a result of the labeling using a bias detector; and
adjusting the data set to improve at least one bias detected by the bias detector using a data set adjuster.
